# EUROPEAN PATENT APPLICATION

(11) **EP 1 686 455 A2**
(43) Date of publication of application: **02.08.2006**
(21) Application number: 05257334.2
(22) Date of filing: 29.11.2005
(51) Int. Cl.: G06F 3/12

(54) **Resource managing system, resource managing program and resource managing method**

(30) Priority: 01.02.2005 JP 2005024983; 25.08.2005 JP 2005244162
(71) Applicant: SEIKO EPSON CORPORATION, Shinjuku-ku, Tokyo 163-0811 (JP)
(72) Inventor: Taniguchi, Shinya, Suwa-shi Nagano-ken 392-8502 (JP)
(74) Representative: Sturt, Clifford Mark

(57) **Abstract**

A resource managing system for managing a resource used by a function module includes a resource measuring device for measuring the amount of the resource used by the function module in a first executing environment; a resource upper limit value acquiring device for acquiring an upper limit value of the resource in a second executing environment; a resource converter for converting the upper limit value of the resource acquired in the resource upper limit value acquiring device into an upper limit value of the resource in the first executing environment; and a resource limit notifying device for performing notification relating to the limit of the resource on the basis of the amount of the resource measured in the resource measuring device and the upper limit value of the resource converted in the resource converter.

## Description

The present invention relates to a system, a program and a method for managing a resource, and particularly, relates to a resource managing system, a resource managing program and a resource managing method suitable for easy development of software and development of software high in stability by verifying the amount of the resource used in an executing environment of the software before the amount of the resource is introduced into this executing environment.

The operation of an incorporating device of a printer, etc. is controlled by incorporating software called an application for incorporation. However, a dedicated developing environment and dedicated hardware are generally required to make the application for incorporation. Therefore, all persons cannot simply make the application for incorporation. An information processor described in JP-A-2004-185595 is proposed to solve this problem.

The invention described in JP-A-2004-185595 is constructed by arranging an emulator able to execute an application executed in an image forming apparatus in PC. Thus, it is possible to develop the application for incorporation even when no incorporating device is used.

Further, a problem exists in that the application for incorporation made by a person unskilled in a programming technique causes an unexpected operation and no operation of the incorporating device itself can be continued. A resource managing system described in JP-A-2004-94782 is proposed to solve this problem.

The invention described in JP-A-2004-94782 is constructed by arranging a limit setting section for setting an operable range with respect to the resource utilized when software executes an operation by an information device, and an operating range verifying section for verifying that the operation is performed within the operable range set in the limit setting section. When there is a resource utilizing request from the software, the operating range verifying section compares the set operable range and the requested amount of the resource. The operating range verifying section stops the execution of this software when it is outside the operable range.

In the invention described in JP-A-2004-185595, the application for incorporation can be virtually executed in the PC. Therefore, the operation of the application for incorporation can be verified to a certain extent in the PC.

However, no amounts of the resource (e.g., memory) used in the respective executing environments in the application for incorporation are perfectly conformed when the application for incorporation is executed in the PC, and when this application for incorporation is actually executed in the incorporating device. This is caused because the executing environments of the application for incorporation are different. For example, a library is used to execute the application for incorporation. Program structures of this library for the PC and the incorporating device differ from each other from a difference in hardware construction. Therefore, even when the same function is used, objects are generated by linking the libraries having the same function but different in the program structure in the PC and the incorporating device. Since these objects are different in the program structure, no amounts of the used resource are naturally perfectly conformed to each other. Accordingly, even when it is an application for incorporation appropriately operated in the PC, there is a possibility that the amount of the used resource is too large when this application for incorporation is actually incorporated into the incorporating device so that the operation becomes unstable by competing with another application for incorporation when plural applications for incorporation are started in the incorporating device. In particular, differing from the PC, the amount of the usable resource is extremely small in the incorporating device of a printer, etc. Therefore, it is extremely important to manage the amount of the resource used in the individual application for incorporation in detail in realizing a stable operation.

On the other hand, in the invention described in JP-A-2004-94782, it is strictly prevented that the operation becomes unstable when the application for incorporation is executed in the incorporating device. No amount of the resource used in the application for incorporation can be verified before this amount is introduced into the incorporating device.

Such a problem is not limited to the case in which the application for incorporation is executed in the incorporating device, but is also similarly supposed with respect to all cases in which software executed in a specific executing environment is developed in another executing environment.

An advantage of some aspects of the invention is to provide a resource managing system, a resource managing program and a resource managing method suitable for easy development of software and development of software high in stability by verifying the amount of the resource used in the software in its executing environment before this amount is introduced into this executing environment.

Mode 1 To achieve the above advantage, the resource managing system of mode 1 is a resource managing system for managing a resource used by a function module and comprising:
resource measuring means for measuring the amount of the resource used by the function module in a first executing environment; resource upper limit value acquiring means for acquiring an upper limit value of the resource in a second executing environment; resource converting means for converting the upper limit value of the resource acquired in the resource upper limit value acquiring means into an upper limit value of the resource in the first executing environment; and resource limit notifying means for performing notification relating to the limit of the resource on the basis of the amount of the resource measured in the resource measuring means and the upper limit value of the resource converted in the resource converting means.

In accordance with such a construction, the amount of the resource used by the function module in the first executing environment is measured by the resource measuring means. Further, the upper limit value of the resource in the second executing environment is acquired by the resource upper limit value acquiring means. The acquired upper limit value of the resource is converted into the upper limit value of the resource in the first executing environment by the resource converting means. The notification relating to the limit of the resource is performed by the resource limit notifying means on the basis of the measured amount of the resource and the converted upper limit value of the resource.

Thus, it is possible to verify whether the amount of the resource used by the function module in the second executing environment has reached the upper limit value of the resource before this amount of the resource is introduced into the second executing environment. Accordingly, in comparison with the former case, the effect of being able to easily develop software and develop software high in stability is obtained.

Here, the resource is a resource able to be used by the function module, and includes a software resource and other resources as well as a hardware resource. Hereinafter, the same contents also hold true in the resource managing systems of modes 2 and 4, the resource managing programs of modes 13, 14 and 16, and the resource managing methods of modes 25 to 28, 30 and 31.

For example, the memory amount used by the function module, or the number of function modules able to be started is included as the amount of the resource. Further, for example, the amount of the resource (the memory amount and the function module number) secured by application utilizing the function module is included. Hereinafter, the same contents also hold true in the resource managing systems of modes 2 and 4, the resource managing programs of modes 13, 14 and 16, and the resource managing methods of modes 25 to 28, 30 and 31.

For example, the following methods are considered as a converting method of the resource. In a first method (a constant ratio converting method), the resource amount after the conversion is calculated by increasing or decreasing the resource amount of a constant ratio with respect to the measured resource amount. In a second method (a constant amount converting method), the resource amount after the conversion is calculated by increasing or decreasing a constant amount from the measured resource amount irrespective of the measured resource amount. In a third method (a constant converting method), the resource amount after the conversion is calculated by replacing the measured resource amount with a constant irrespective of the measured resource amount. In a fourth method (a mixing type converting method), one of the first to third methods is selected on the basis of the kind of the resource or the measured resource amount, and the resource amount after the conversion is calculated by the selected method. For example, the converting method can be selected by setting threshold values A, B as follows. When resource amount < A, the constant converting method is selected. When A < resource amount < B, the constant amount converting method is selected. When B < resource amount, the constant ratio converting method is selected. Here, A < B is set. Hereinafter, the same contents also hold true in the resource managing systems of modes 2 and 4, the resource managing programs of modes 13, 14 and 16, and the resource managing methods of modes 25 to 28, 30 and 31.

For example, the measurement of the resource includes an operation in which an operation for securing the resource by application is grasped and the resource amount intended to be newly secured is acquired. Hereinafter, the same contents also hold true in the resource managing systems of modes 2 and 4, the resource managing programs of modes 13, 14 and 16, and the resource managing methods of modes 25 to 28, 30 and 31.

For example, the notification relating to the limit of the resource includes notification showing that the amount of the resource used by the function module has reached a limit condition or an upper limit value, notification showing that the amount of the resource used by the function module is limited, or notification for noticing or recommending that the amount of the resource used by the function module should be limited. Further, for example, the notification relating to the limit of the resource includes the display of a message showing that the amount of the resource used by the function module has reached the upper limit, and the generation of log information showing that the amount of the resource used by the function module has reached the upper limit. Hereinafter, the same contents also hold true in the resource managing systems of modes 2 and 4, the resource managing programs of modes 13, 14 and 16, and the resource managing methods of modes 25 to 28, 30 and 31.

Further, for example, it is possible to set the upper limit value of the resource in the second executing environment as the limit condition of the resource. Hereinafter, the same contents also hold true in the resource managing systems of modes 2 and 4, the resource managing programs of modes 13, 14 and 16, and the resource managing methods of modes 25 to 28, 30 and 31.

Further, the resource upper limit value acquiring means may be set to any construction if the resource upper limit value acquiring means acquires the upper limit value of the resource. For example, the upper limit value of the resource may be inputted from an input device, etc., and the upper limit value of the resource may be gained or received from an external device, etc. The upper limit value of the resource may be also read out of a memory device, a memory medium, etc., and the upper limit value of the resource may be also extracted from the function module and other data. Accordingly, the acquisition includes at least input, gain, signal reception, reading-out and extraction. Hereinafter, the same contents also hold true in the resource managing systems of modes 2 and 4.

The present system may be also realized as a single device, a terminal and other devices, and may be also realized as a network system in which plural devices, terminals and other devices are communicably connected. In the latter case, each constructional element may belong to any one of the plural devices, etc. if each constructional element is communicably connected. Hereinafter, the same contents also hold true in the resource managing systems of modes 2 and 4.

Mode 2 The resource managing system of mode 2 is a resource managing system for managing a resource used by a first function module and plural second function modules requiring the first function module in its execution, and comprising:
resource measuring means for measuring the amount of the resource used by the second function module in the first executing environment; resource upper limit value acquiring means for acquiring an upper limit value of the resource in a second executing environment; resource converting means for converting the upper limit value of the resource acquired in the resource upper limit value acquiring means into an upper limit value of the resource in the first executing environment; and resource limit notifying means for performing notification relating to the limit of the resource on the basis of the amount of the resource measured in the resource measuring means and the upper limit value of the resource converted in the resource converting means.

In accordance with such a construction, the amount of the resource used by the second function module in the first executing environment is measured by the resource measuring means. Further, the upper limit value of the resource in the second executing environment is acquired by the resource upper limit value acquiring means. The acquired upper limit value of the resource is converted into the upper limit value of the resource in the first executing environment by the resource converting means. The notification relating to the limit of the resource is performed by the resource limit notifying means on the basis of the measured amount of the resource and the converted upper limit value of the resource.

Thus, it is possible to verify whether the amount of the resource used by the second function module in the second executing environment has reached the upper limit value of the resource before this amount of the resource is introduced into the second executing environment. Accordingly, in comparison with the former case, the effect of being able to easily develop software and develop software high in stability is obtained.

Mode 3 In the resource managing system of mode 2, the resource managing system of mode 3 is characterized in that the resource measuring means measures the amount of the resource used by the second function module in the first executing environment and the amount of the resource used by the first function module in the execution of the second function module in the first executing environment.

In accordance with such a construction, the amount of the resource used by the second function module in the first executing environment, and the amount of the resource used by the first function module in the first executing environment in the execution of its second function module are measured by the resource measuring means.

Thus, the effect of being able to verify whether the amount of the resource used by the first function module in the second executing environment has reached the upper limit value of the resource in the second function module unit is obtained.

Mode 4 The resource managing system of mode 4 is a resource managing system for managing a resource used by a first function module and plural second function modules requiring the first function module in its execution, and comprising:
resource measuring means for measuring the amount of the resource used by the first function module in the execution of the second function module in the first executing environment; resource upper limit value acquiring means for acquiring an upper limit value of the resource in a second executing environment; resource converting means for converting the upper limit value of the resource acquired in the resource upper limit value acquiring means into an upper limit value of the resource in the first executing environment; and resource limit notifying means for performing notification relating to the limit of the resource on the basis of the amount of the resource measured in the resource measuring means and the upper limit value of the resource converted in the resource converting means.

In accordance with such a construction, the amount of the resource used by the first function module in the first executing environment in the execution of the second function module is measured by the resource measuring means. Further, the upper limit value of the resource in the second executing environment is acquired by the resource upper limit value acquiring means. The acquired upper limit value of the resource is converted into the upper limit value of the resource in the first executing environment by the resource converting means. The notification relating to the limit of the resource is performed by the resource limit notifying means on the basis of the measured amount of the resource and the converted upper limit value of the resource.

Thus, it is possible to verify whether the amount of the resource used by the first function module in the second executing environment in the execution of the second function module has reached the upper limit value of the resource before this amount of the resource is introduced into the second executing environment. Accordingly, in comparison with the former case, the effect of being able to easily develop software and develop software high in stability is obtained.

Mode 5 In the resource managing system of one of modes 2 to 4, the resource managing system of mode 5 is characterized in that the resource managing system further comprises resource limiting means for inhibiting securing of the resource using the function modules on the basis of the amount of the resource measured in the resource measuring means and the upper limit value of the resource converted in the resource converting means.

In accordance with such a construction, the securing of the resource using the function module is inhibited by the resource limiting means on the basis of the measured amount of the resource and the converted upper limit value of the resource.

Thus, the effect of being able to limit that the function module uses the amount of the resource by exceeding the upper limit is obtained.

Mode 6 Further, in the resource managing system of one of modes 1 to 5, the resource managing system of mode 6 is characterized in that the resource converting means performs the conversion on the basis of a resource conversion table for registering a conversion ratio determined on the basis of the amount of the resource used in a predetermined condition in the first executing environment and the amount of the resource used in the predetermined condition in the second executing environment.

In accordance with such a construction, the conversion is performed by the resource converting means on the basis of the resource conversion table.

Thus, the effect of being able to comparatively accurately convert the amount of the resource or the upper limit value between the first executing environment and the second executing environment is obtained.

Here, for example, the predetermined condition includes that a test program executable in one of the first executing environment and the second executing environment is executed under the same environment (which does not mean the resource, but means simultaneous execution with another program, etc.). Hereinafter, the same contents also hold true in the resource managing program of mode 18 and the resource managing method of mode 33.

Further, for example, the conversion ratio determined on the basis of the amount of the resource is a ratio calculated by comparing resource consumptions between the two executing environments obtained as an executing result of the test program. Namely, the calculation is included in the determination. Hereinafter, the same contents also hold true in the resource managing program of mode 18 and the resource managing method of mode 33.

Mode 7 Further, in the resource managing system of mode 6, the resource managing system of mode 7 is characterized in that the resource conversion table registers the conversion ratio every classification of the resource, and
the resource converting means acquires the corresponding conversion ratio from the resource conversion table in accordance with the classification of the resource used by the function module, and performs the conversion on the basis of the acquired conversion ratio.

In accordance with such a program, the corresponding conversion ratio is acquired from the resource conversion table by the resource converting means in accordance with the classification of the resource used by the function module. The conversion is performed on the basis of the acquired conversion ratio.

Thus, since the conversion according to the classification of the resource used by the function module can be performed, the effect of being able to further accurately convert the amount of the resource or the upper limit value between the first executing environment and the second executing environment is obtained.

Here, for example, in the case of the resource able to be defined by an occupying ratio of hardware of a memory, a file system, etc., the classification of this hardware is included as the classification of the resource. In the case of a software-like concept depending on OS (Operating System) of a thread, a socket, etc., the classification of this concept is included as the classification of the resource. Hereinafter, the same contents also hold true in the resource managing program of mode 19 and the resource managing method of mode 34.

The resource conversion table may be set to any construction if the conversion ratio is registered to the resource conversion table every classification of the resource. Further concretely, it is also possible to select the converting method on the basis of the classification of the resource, and calculate the conversion ratio by the selected converting method every classification of the resource, and register the calculated conversion ratio. For example, as mentioned above, the constant ratio converting method, the constant amount converting method, the constant converting method and the mixing type converting method are considered as the converting method. Hereinafter, the same contents also hold true in the resource managing program of mode 19 and the resource managing method of mode 34.

Mode 8 Further, in the resource managing system of one of modes 6 and 7, the resource managing system of mode 8 is characterized in that the resource conversion table registers the conversion ratio every using mode of the resource, and
the resource converting means acquires the corresponding conversion ratio from the resource conversion table in accordance with the mode of the resource used by the function module, and performs the conversion on the basis of the acquired conversion ratio.

In accordance with such a construction, the corresponding conversion ratio is acquired by the resource converting means from the resource conversion table in accordance with the mode of the resource used by the function module. The conversion is performed on the basis of the acquired conversion ratio.

Thus, it is possible to perform the conversion according to the mode of the resource used by the function module. Accordingly, the effect of being able to further accurately convert the amount of the resource or the upper limit value between the first executing environment and the second executing environment is obtained.

Here, the using mode of the resource is a using mode different in a using object among the resources of the same classification. Concretely, in the example of the memory, there is a case in which the using mode is different as in a memory secured in a JAVA (registered trademark) interpreter and a memory secured in a Zip library. The conversion ratio is different in each case. Accordingly, it is necessary to separately treat each case. Hereinafter, the same contents also hold true in the resource managing program of mode 20 and the resource managing method of mode 35.

Mode 9 Further, in the resource managing system of one of modes 6 to 8, the resource managing system of mode 9 is characterized in that the conversion ratio is determined in the resource conversion table with respect to each of plural test modules on the basis of the amount of the resource used by this test module in the first executing environment and the second executing environment, and a maximum value among the conversion ratios determined with respect to the respective test modules is registered to the resource conversion table.

Thus, since the maximum value among the conversion ratios determined with respect to the respective test modules is registered to the resource conversion table, the amount of the resource used by the function module can be estimated a lot. Accordingly, the effect of being able to comparatively reliably guarantee the operation of the function module is obtained.

Here, the test module is a test module in which this test module is operated in both the first executing environment and the second executing environment, and the resource is consumed by this execution. Hereinafter, the same contents also hold true in the resource managing system of mode 10, the resource managing programs of modes 21 and 22, and the resource managing methods of modes 36 and 37.

Mode 10 Further, in the resource managing system of one of modes 6 to 8, the resource managing system of mode 10 is characterized in that the conversion ratio is determined in the resource conversion table with respect to each of plural test modules on the basis of the amount of the resource used by this test module in the first executing environment and the second executing environment, and an average value of the conversion ratios determined with respect to the respective test modules is registered to the resource conversion table.

Thus, the average value among the conversion ratios determined with respect to the respective test modules is registered to the resource conversion table. Accordingly, the effects of being able to guarantee the operation of the function module with reliability of a certain degree and restrain the amount of the resource used in the second executing environment are obtained.

Mode 11 In the resource managing system of one of modes 1 to 10, the resource managing system of mode 11 is characterized in that the resource limit notifying means displays a message showing that the amount of the resource used by the function module has reached an upper limit.

In accordance with such a construction, the message showing that the amount of the resource used by the function module has reached the upper limit is displayed by the resource limit notifying means.

Thus, the effect of being able to grasp that the amount of the resource used by the function module has reached the upper limit with reference to the message is obtained.

Here, the resource limit notifying means displays the message. However, it is considered to perform the notification by a voice, flush of a screen, display of an icon, a mail, a telephone, a FAX, etc. as another mode. Hereinafter, the same contents also hold true in the resource managing program of mode 23 and the resource managing method of mode 38.

Mode 12 In the resource managing system of one of modes 1 to 10, the resource managing system of mode 12 is characterized in that the resource limit notifying means generates log information showing that the amount of the resource used by the function module has reached an upper limit.

In accordance with such a construction, the log information showing that the amount of the resource used by the function module has reached the upper limit is generated by the resource limit notifying means.

Thus, the effect of being able to grasp that the amount of the resource used by the function module has reached the upper limit with reference to the log information is obtained.

Mode 13 On the other hand, to achieve the above advantage, the resource managing program of mode 13 is a resource managing program for managing a resource used by a function module and including:
a program for making a computer execute processings constructed by a resource measuring step for measuring the amount of the resource used by the function module in a first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

In accordance with such a construction, when the program is read by the computer and the computer executes the processings in accordance with the read program, an operation and an effect equal to those of the resource managing system of mode 1 are obtained.

Here, the resource upper limit value acquiring step may be set to any mode if the upper limit value of the resource is acquired. For example, the upper limit value of the resource may be inputted from an input device, etc., and the upper limit value of the resource may be gained or received from an external device, etc. The upper limit value of the resource may be read out of a memory device, a memory medium, etc., and the upper limit value of the resource may be extracted from the function module and other data. Accordingly, the acquisition includes at least input, gain, signal reception, reading-out and extraction. Hereinafter, the same contents also hold true in the resource managing programs of modes 14 and 16 and the resource managing methods of modes 25 to 28, 30 and 31.

Mode 14 Further, the resource managing program of mode 14 is a resource managing program for managing a resource used by a first function module and plural second function modules requiring the first function module in its execution, and including:
a program for making a computer execute processings constructed by a resource measuring step for measuring the amount of the resource used by the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

In accordance with such a construction, when the program is read by the computer and the computer executes the processings in accordance with the read program, an operation and an effect equal to those of the resource managing system of mode 2 are obtained.

Mode 15 Further, in the resource managing program of mode 14, the resource managing program of mode 15 is characterized in that the amount of the resource used by the second function module in the first executing environment and the amount of the resource used by the first function module in the execution of the second function module in the first executing environment are measured in the resource measuring step.

In accordance with such a construction, when the program is read by the computer and the computer executes the processings in accordance with the read program, an operation and an effect equal to those of the resource managing system of mode 3 are obtained.

Mode 16 Further, the resource managing program of mode 16 is a resource managing program for managing a resource used by a first function module and plural second function modules requiring the first function module in its execution, and including:
a program for making a computer execute processings constructed by a resource measuring step for measuring the amount of the resource used by the first function module in the execution of the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

In accordance with such a construction, when the program is read by the computer and the computer executes the processings in accordance with the read program, an operation and an effect equal to those of the resource managing system of mode 4 are obtained.

Mode 17 Further, in the resource managing program of one of modes 14 to 16, the resource managing program of mode 17 is characterized in that the resource managing program includes a program for making a computer execute processing constructed by a resource limiting step for inhibiting securing of the resource using the function modules on the basis of the amount of the resource measured in the resource measuring step and the upper limit value of the resource converted in the resource converting step.

In accordance with such a construction, when the program is read by the computer and the computer executes the processings in accordance with the read program, an operation and an effect equal to those of the resource managing system of mode 5 are obtained.

Mode 18 Further, in the resource managing program of one of modes 13 to 17, the resource managing program of mode 18 is characterized in that the conversion is performed in the resource converting step on the basis of a resource conversion table for registering a conversion ratio determined on the basis of the amount of the resource used in a predetermined condition in the first executing environment and the amount of the resource used in the predetermined condition in the second executing environment.

In accordance with such a construction, when the program is read by the computer and the computer executes the processings in accordance with the read program, an operation and an effect equal to those of the resource managing system of mode 6 are obtained.

Mode 19 Further, in the resource managing program of mode 18, the resource managing program of mode 19 is characterized in that the resource conversion table registers the conversion ratio every classification of the resource, and
the corresponding conversion ratio is acquired from the resource conversion table in accordance with the classification of the resource used by the function module, and the conversion is performed on the basis of the acquired conversion ratio in the resource converting step.

In accordance with such a construction, when the program is read by the computer and the computer executes the processings in accordance with the read program, an operation and an effect equal to those of the resource managing system of mode 7 are obtained.

Mode 20 Further, in the resource managing program of one of modes 18 and 19, the resource managing program of mode 20 is characterized in that the resource conversion table registers the conversion ratio every using mode of the resource, and
the corresponding conversion ratio is acquired from the resource conversion table in accordance with the mode of the resource used by the function module, and the conversion is performed on the basis of the acquired conversion ratio in the resource converting step.

In accordance with such a construction, when the program is read by the computer and the computer executes the processings in accordance with the read program, an operation and an effect equal to those of the resource managing system of mode 8 are obtained.

Mode 21 Further, in the resource managing program of one of modes 18 to 20, the resource managing program of mode 21 is characterized in that the conversion ratio is determined in the resource conversion table with respect to each of plural test modules on the basis of the amount of the resource used by this test module in the first executing environment and the second executing environment, and a maximum value among the conversion ratios determined with respect to the respective test modules is registered to the resource conversion table.

In accordance with such a construction, when the program is read by the computer and the computer executes the processings in accordance with the read program, an operation and an effect equal to those of the resource managing system of mode 9 are obtained.

Mode. 22 Further, in the resource managing program of one of modes 18 to 20, the resource managing program of mode 22 is characterized in that the conversion ratio is determined in the resource conversion table with respect to each of plural test modules on the basis of the amount of the resource used by this test module in the first executing environment and the second executing environment, and an average value of the conversion ratios determined with respect to the respective test modules is registered to the resource conversion table.

In accordance with such a construction, when the program is read by the computer and the computer executes the processings in accordance with the read program, an operation and an effect equal to those of the resource managing system of mode 10 are obtained.

Mode 23 Further, in the resource managing program of one of modes 13 to 22, the resource managing program of mode 23 is characterized in that a message showing that the amount of the resource used by the function module has reached an upper limit is displayed in the resource limit notifying step.

In accordance with such a construction, when the program is read by the computer and the computer executes the processings in accordance with the read program, an operation and an effect equal to those of the resource managing system of mode 11 are obtained.

Mode 24 Further, in the resource managing program of one of modes 13 to 22, the resource managing program of mode 24 is characterized in that log information showing that the amount of the resource used by the function module has reached an upper limit is generated in the resource limit notifying step.

In accordance with such a construction, when the program is read by the computer and the computer executes the processings in accordance with the read program, an operation and an effect equal to those of the resource managing system of mode 12 are obtained.

Mode 25 On the other hand, to achieve the above advantage, the resource managing method of mode 25 is a resource managing method for managing a resource used by a function module and including:
a resource measuring step for measuring the amount of the resource used by the function module in a first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

Thus, effects equal to those of the resource managing system of mode 1 are obtained.

Mode 26 Further, the resource managing method of mode 26 is a resource managing method for managing a resource used by a function module and including:
a resource measuring step for measuring the amount of the resource used by the function module in a first executing environment by arithmetic means; a resource upper limit value acquiring step for acquiring an upper limit value of the resource in a second executing environment by the arithmetic means; a resource converting step for converting the upper limit value of the resource acquired in the resource upper limit value acquiring step into an upper limit value of the resource in the first executing environment by the arithmetic means; and a resource limit notifying step for performing notification relating to the limit of the resource by the arithmetic means on the basis of the amount of the resource measured in the resource measuring step and the upper limit value of the resource converted in the resource converting step.

Thus, effects equal to those of the resource managing system of mode 1 are obtained.

Mode 27 Further, the resource managing method of mode 27 is a resource managing method for managing a resource used by a first function module and plural second function modules requiring the first function module in its execution, and including:
a resource measuring step for measuring the amount of the resource used by the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

Thus, effects equal to those of the resource managing system of mode 2 are obtained.

Mode 28 Further, the resource managing method of mode 28 is a resource managing method for managing a resource used by a first function module and plural second function modules requiring the first function module in its execution, and including:
a resource measuring step for measuring the amount of the resource used by the second function module in the first executing environment by arithmetic means; a resource upper limit value acquiring step for acquiring an upper limit value of the resource in a second executing environment by the arithmetic means; a resource converting step for converting the upper limit value of the resource acquired in the resource upper limit value acquiring step into an upper limit value of the resource in the first executing environment by the arithmetic means; and a resource limit notifying step for performing notification relating to the limit of the resource by the arithmetic means on the basis of the amount of the resource measured in the resource measuring step and the upper limit value of the resource converted in the resource converting step.

Thus, effects equal to those of the resource managing system of mode 2 are obtained.

Mode 29 In the resource managing method of one of modes 27 and 28, the resource managing method of mode 29 is characterized in that the amount of the resource used by the second function module in the first executing environment and the amount of the resource used by the first function module in the execution of the second function module in the first executing environment are measured in the resource measuring step.

Thus, effects equal to those of the resource managing system of mode 3 are obtained.

Mode 30 Further, the resource managing method of mode 30 is a resource managing method for managing a resource used by a first function module and plural second function modules requiring the first function module in its execution, and including:
a resource measuring step for measuring the amount of the resource used by the first function module in the execution of the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

Thus, effects equal to those of the resource managing system of mode 4 are obtained.

Mode 31 Further, the resource managing method of mode 31 is a resource managing method for managing a resource used by a first function module and plural second function modules requiring the first function module in its execution, and including:
a resource measuring step for measuring the amount of the resource used by the first function module in the execution of the second function module in the first executing environment by arithmetic means; a resource upper limit value acquiring step for acquiring an upper limit value of the resource in a second executing environment by the arithmetic means; a resource converting step for converting the upper limit value of the resource acquired in the resource upper limit value acquiring step into an upper limit value of the resource in the first executing environment by the arithmetic means; and a resource limit notifying step for performing notification relating to the limit of the resource by the arithmetic means on the basis of the amount of the resource measured in the resource measuring step and the upper limit value of the resource converted in the resource converting step.

Thus, effects equal to those of the resource managing system of mode 4 are obtained.

Mode 32 Further, in the resource managing method of one of modes 27 to 31, the resource managing method of mode 32 is characterized in that this resource managing method includes a resource limiting step for inhibiting securing of the resource using the function modules on the basis of the amount of the resource measured in the resource measuring step and the upper limit value of the resource converted in the resource converting step.

Thus, effects equal to those of the resource managing system of mode 5 are obtained.

Mode 33 Further, in the resource managing method of one of modes 25 to 32, the resource managing method of mode 33 is characterized in that the conversion is performed in the resource converting step on the basis of a resource conversion table for registering a conversion ratio determined on the basis of the amount of the resource used in a predetermined condition in the first executing environment and the amount of the resource used in the predetermined condition in the second executing environment.

Thus, effects equal to those of the resource managing system of mode 6 are obtained.

Mode 34 Further, in the resource managing method of mode 33, the resource managing method of mode 34 is characterized in that the resource conversion table registers the conversion ratio every classification of the resource, and
the corresponding conversion ratio is acquired from the resource conversion table in accordance with the classification of the resource used by the function module, and the conversion is performed on the basis of the acquired conversion ratio in the resource converting step.

Thus, effects equal to those of the resource managing system of mode 7 are obtained.

Mode 35 Further, in the resource managing method of one of modes 33 and 34, the resource managing method of mode 35 is characterized in that the resource conversion table registers the conversion ratio every using mode of the resource, and
the corresponding conversion ratio is acquired from the resource conversion table in accordance with the mode of the resource used by the function module, and the conversion is performed on the basis of the acquired conversion ratio in the resource converting step.

Thus, effects equal to those of the resource managing system of mode 8 are obtained.

Mode 36 Further, in the resource managing method of one of modes 33 to 35, the resource managing method of mode 36 is characterized in that the conversion ratio is determined in the resource conversion table with respect to each of plural test modules on the basis of the amount of the resource used by this test module in the first executing environment and the second executing environment, and a maximum value among the conversion ratios determined with respect to the respective test modules is registered to the resource conversion table.

Thus, effects equal to those of the resource managing system of mode 9 are obtained.

Mode 37 Further, in the resource managing method of one of modes 33 to 35, the resource managing method of mode 37 is characterized in that the conversion ratio is determined in the resource conversion table with respect to each of plural test modules on the basis of the amount of the resource used by this test module in the first executing environment and the second executing environment, and an average value of the conversion ratios determined with respect to the respective test modules is registered to the resource conversion table.

Thus, effects equal to those of the resource managing system of mode 10 are obtained.

Mode 38 Further, in the resource managing method of one of modes 25 to 37, the resource managing method of mode 38 is characterized in that a message showing that the amount of the resource used by the function module has reached an upper limit is displayed in the resource limit notifying step.

Thus, effects equal to those of the resource managing system of mode 11 are obtained.

Mode 39 Further, in the resource managing method of one of modes 25 to 37, the resource managing method of mode 39 is characterized in that log information showing that the amount of the resource used by the function module has reached an upper limit is generated in the resource limit notifying step.

Thus, effects equal to those of the resource managing system of mode 12 are obtained.

Embodiments of the invention will now be described by way of further example only and with reference to the accompanying drawings wherein like numbers reference like elements; in which:-

Fig. 1 is a view showing the construction of JAVA (registered trademark) software.

Fig. 2 is a functional block diagram showing the schematic function of a host terminal 100.

Fig. 3 is a block diagram showing the hardware construction of the host terminal 100.

Fig. 4 is a view showing the data structure of resource limit information 400.

Fig. 5 is a view showing the data structure of module information 420.

Fig. 6 is a view showing the data structure of an executing environment information registering table 440.

Fig. 7 is a view showing the data structure of a resource conversion table 22.

Fig. 8 is a view showing the data structure of a resource managing table 460.

Fig. 9 is a view showing the data structure of an event listener table 480.

Fig. 10 is a flow chart showing individual function module control processing.

Fig. 11 is a flow chart showing executing yes/no judgment processing.

Fig. 12 is a flow chart showing module starting processing.

Fig. 13 is a flow chart showing event listener registration processing.

Fig. 14 is a flow chart showing class reading processing.

Fig. 15 is a flow chart showing event listener control processing.

Fig. 16 is a flow chart showing event listener execution processing.

Fig. 17 is a flow chart showing instance deletion processing.

Fig. 18 is a view showing the contents of a log file when an error is generated.

Fig. 19 is a view showing the contents of the log file when no error is generated.

Fig. 20 is a time chart showing a case in which individual function modules b, c as a resource managing object are executed in parallel.

Fig. 21 is a functional block diagram showing the schematic function of the host terminal 100.

Fig. 22 is a view showing the data structure of the resource conversion table 22.

Fig. 23 is a view showing the data structure of the resource managing table 460.

Fig. 24 is a flow chart showing the execution yes/no judgment processing.

Fig. 25 is a view showing the data structure of an executing result registering table 520.

Fig. 26 is a flow chart showing using resource amount measurement processing.

Fig. 27 is a flow chart showing resource conversion table generation processing.

Fig. 28 is a table showing executing results when three test modules T1 to T3 are executed by a network printer.

Fig. 29 is a table showing executing results when a standby time is set to "0" and the three test modules T1 to T3 are executed by the host terminal 100.

Fig. 30 is a table showing executing results when the standby time is set to "10" and the three test modules T1 to T3 are executed by the host terminal 100.

Fig. 31 is a flow chart showing module authentication processing.

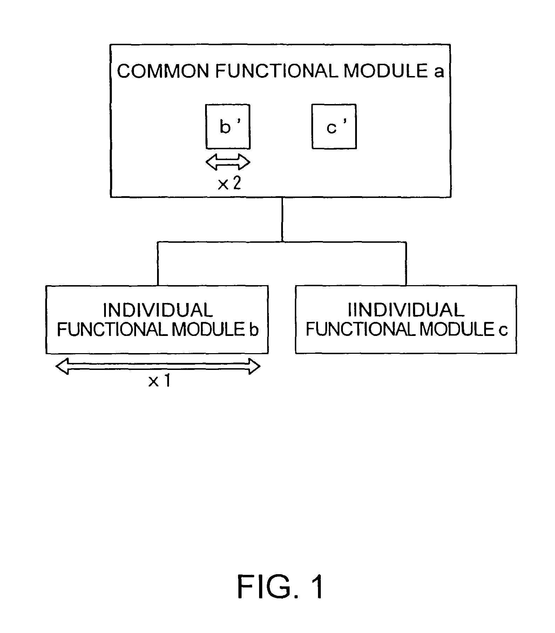

A first embodiment mode of the invention will next be explained with reference to the drawings. Figs. 1 to 20 are views showing a resource managing system in the invention and this first embodiment mode.

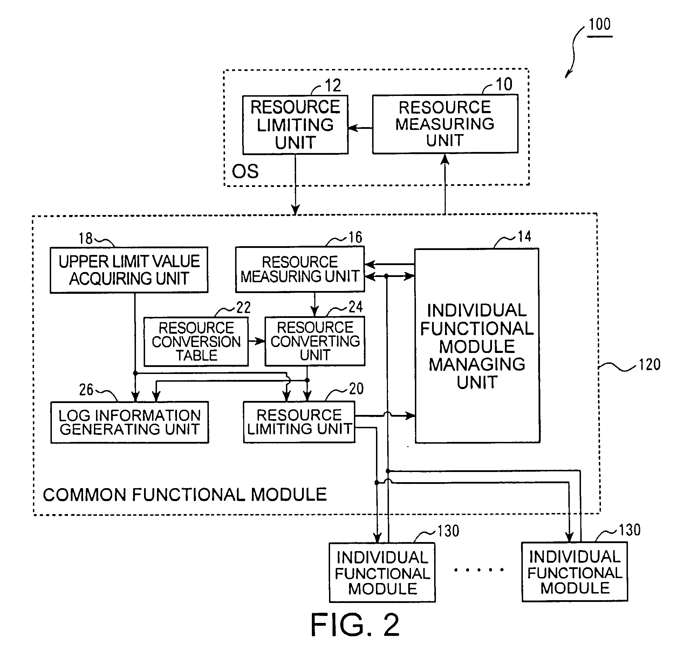

In this embodiment mode, the resource managing system in the invention and this embodiment mode are applied to a case in which a JAVA (registered trademark) class set for controlling the operation of a network printer is emulated in an executing environment of a JAVA (registered trademark) application of a host terminal 100 as shown in Fig. 2.

The function of the host terminal 100 applying the invention thereto will first be schematically explained.

Fig. 1 is a view showing the construction of JAVA (registered trademark) software.

In the executing environment of the JAVA (registered trademark) application, a common function module constructed by the JAVA (registered trademark) class for controlling the execution of the JAVA (registered trademark) class set and JVM (Java (registered trademark) Virtual Machine) is executed in OS, and an individual function module as the JAVA (registered trademark) class set is executed in the common function module. Here, the JAVA (registered trademark) software is constructed by the common function module and the individual function module.

As shown in Fig. 1, the common function module can execute plural individual function modules. The example of Fig. 1 shows a case in which two individual function modules b, c are executed in the common function module a. Here, when the amount of a resource used by the individual function module b is set to x1 and the amount of the resource used by the common function module a in the execution of the individual function module b is set to x2 and an upper limit value of the resource able to be used by the individual function module b is set to Xₘₐₓ, the amount of the resource is limited in this embodiment mode so as to set x1+x2 ≤ Xₘₐₓ.

Fig. 2 is a functional block diagram showing the schematic function of the host terminal 100.

As shown in Fig. 2, the host terminal 100 is constructed by arranging the OS 110, the common function module 120 and the plural individual function modules 130.

The OS 110 is constructed by arranging a resource measuring section 10 for measuring the amount of the resource used by the JAVA (registered trademark) software, and a resource limiting section 12 for limiting the amount of the resource used by the entire JAVA (registered trademark) software.

The resource limiting section 12 limits the resource used by the JAVA (registered trademark) software such that the amount of the resource measured in the resource measuring section 10 is less than a predetermined upper limit value allocated to the JAVA (registered trademark) software.

The common function module 120 is constructed by arranging an individual function module managing section 14 for managing the execution of the individual function module 130, a resource measuring section 16 for measuring the amount of the resource used by the individual function module managing section 14 and the individual function module 130, a resource conversion table 22 for registering a conversion ratio determined on the basis of the amount of the resource used by the host terminal 100 in a predetermined condition and the amount of the resource used by the network printer in the same predetermined condition, and a resource converting section 24 for converting the amount of the resource.

The resource measuring section 16 measures the amount of the resource used by the individual function module 130 every each individual function module 130, and the amount of the resource used by the individual function module managing section 14 in the execution of its individual function module 130.

The resource converting section 24 converts the amount of the resource measured in the resource measuring section 16 into the amount of the resource used in the network printer on the basis of the resource conversion table 22.

The common function module 120 is further constructed by arranging an upper limit value acquiring section 18 for acquiring an upper limit value of the resource in the network printer by the individual function module 130, a resource limiting section 20 for limiting the amount of the resource used by the individual function module managing section 14 and the individual function module 130, and a log information generating section 26 for generating log information.

The resource limiting section 20 limits the amount of the resource used by the individual function module 130 and the amount of the resource used by the individual function module managing section 14 in the execution of its individual function module 130 such that the amount of the resource converted in the resource converting section 24 is less than the upper limit value acquired in the upper limit value acquiring section 18.

The log information generating section 26 generates the log information showing that the amount of the resource used by the individual function module 130 has reached the upper limit when it is judged that the amount of the resource converted in the resource converting section 24 is the upper limit value acquired in the upper limit value acquiring section 18 or more.

The construction of the host terminal 100 will next be explained in detail.

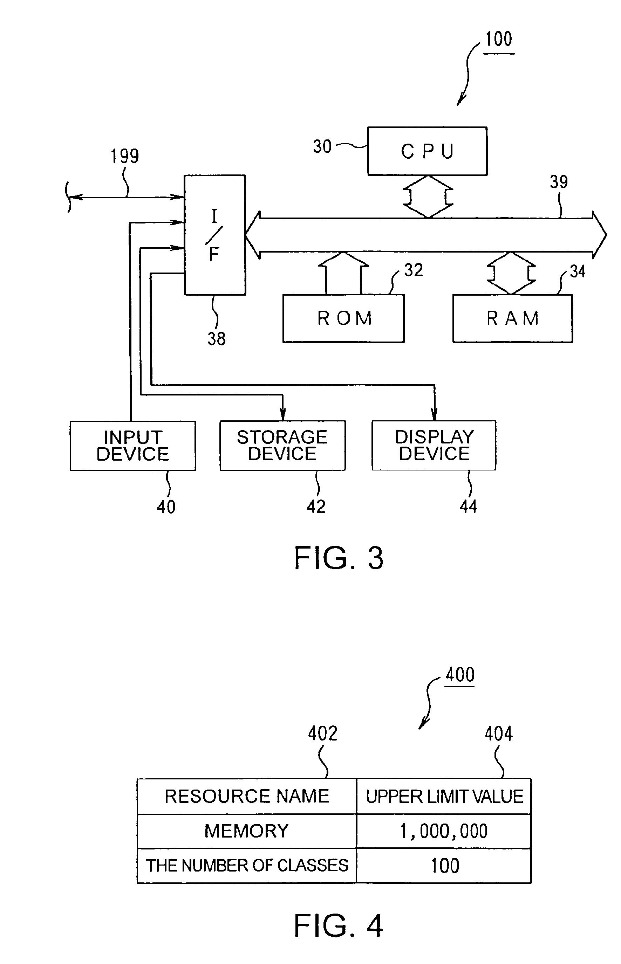

Fig. 3 is a block diagram showing the hardware construction of the host terminal 100.

As shown in Fig. 3, the host terminal 100 is constructed by a CPU 30 for controlling an arithmetic operation and the operation of the entire system on the basis of a control program, a ROM 32 for storing the control program of the CPU 30, etc. to a predetermined area in advance, a RAM 34 for storing data read out of the ROM 32, etc. and an arithmetic result required in an arithmetic process of the CPU 30, and an I/F 38 for mediating the input and output of data with respect to an external device. These elements are connected so as to mutually transmit and receive data by a bus 39 as a signal line for transferring data.

An input device 40 constructed by a keyboard, a mouse, etc. able to input data as a human interface, a memory device 42 for storing data, a table, etc. as a file, a display device 44 for displaying a screen on the basis of an image signal and a signal line for connection to a network 199 are connected to the I/F 38 as the external device.

The data structure of the memory device 42 will next be explained in detail.

The memory device 42 stores the common function module 120 and the plural individual function modules 130.

The individual function module 130 is constructed by including resource limit information for storing the upper limit value of the resource in the network printer.

Fig. 4 is a view showing the data structure of the resource limit information 400.

As shown in Fig. 4, the resource limit information 400 is constructed by including a field 402 for storing the upper limit value of the memory (RAM 34) able to be used by the individual function module 130 and the common function module 120 in the execution of this individual function module 130, and a field 404 for storing the number of classes able to be started by the individual function module 130 and the common function module 120 in the execution of this individual function module 130.

The individual function module 130 is further constructed by including module information relative to the individual function module 130.

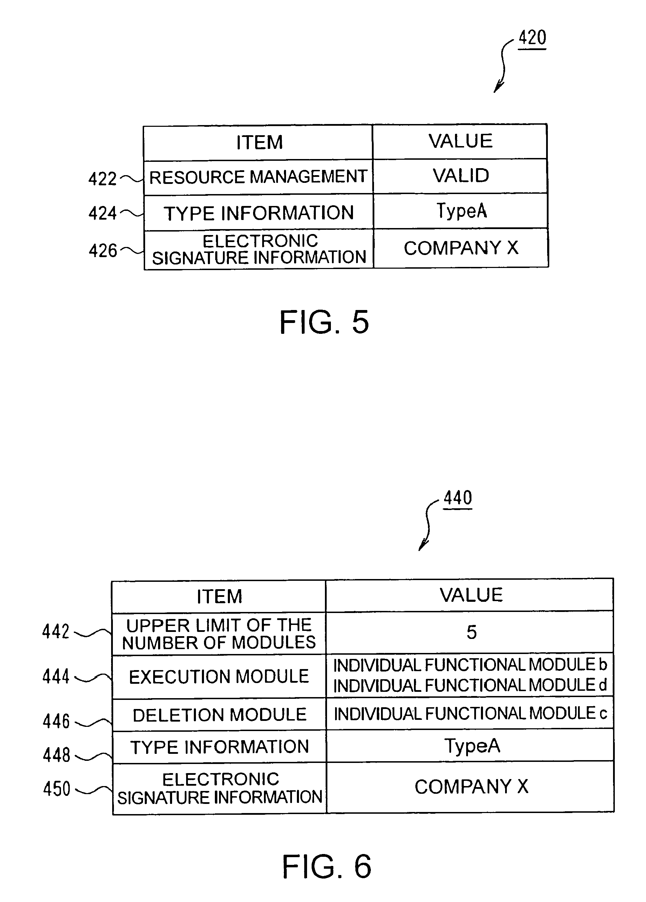

Fig. 5 is a view showing the data structure of the module information 420.

As shown in Fig. 5, the module information 420 is constructed by including a field 422 for storing whether it is set to an object (hereinafter called a resource managing object) for limiting the amount of the resource used by the individual function module 130 or not, a field 424 for storing the device kind of the network printer able to be executed by the individual function module 130, and a field 426 for storing electronic signature information.

In the example of Fig. 5, "valid" is stored to the field 422. This shows that the individual function module 130 is managed as a resource managing object. Further, "TypeA" is stored to the field 424, and "corporation X" is stored to the field 426. This shows that the device kind able to be executed by the individual function module 130 is "TypeA" and the electronic signature of corporation X is received.

The memory device 42 further stores an executing environment information registering table for registering executing environment information showing an executing environment of the common function module 120.

Fig. 6 is a view showing the data structure of the executing environment information registering table 440.

As shown in Fig. 6, the executing environment information registering table 440 is constructed by including a field 442 for registering an upper limit value of the number of individual function modules 130 able to be started, a field 444 for registering the name of the individual function module 130 to be executed, a field 446 for registering the name of the individual function module 130 to be deleted, a field 448 for registering the device kind of the emulated network printer, and a field 450 for registering the electronic signature information able to be coped.

In the example of Fig. 6, "5" is registered to the field 442, and "individual function modules b, d" are registered to the field 444, and "individual function module c" is registered to the field 446. This shows that the individual function modules 130 can be started until five individual function modules 130 at its maximum, and the individual function modules b, d are executed at the starting time of the common function module 120, and the individual function module c should be deleted. Further, "TypeA" is registered to the field 448, and "corporation X" is registered to the field 450. This shows that the device kind of the emulated network printer is "TypeA" and the individual function module 130 including the electronic signature information of corporation X can be executed.

The memory device 42 further stores the resource conversion table 22.

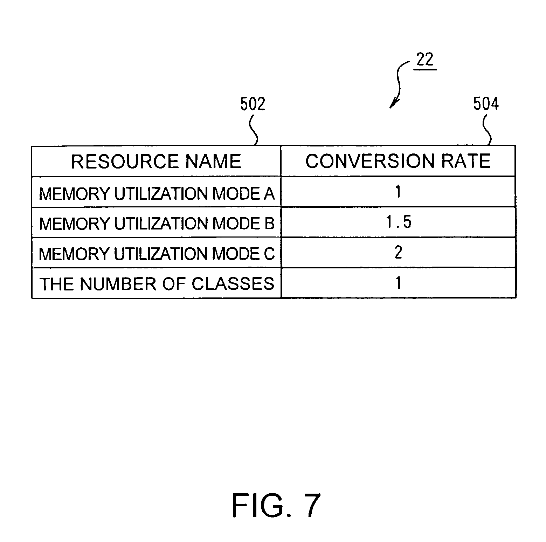

Fig. 7 is a view showing the data structure of the resource conversion table 22.

As shown in Fig. 7, one record is registered to the resource conversion table 22 every classification or using mode of the resource. Each record is constructed by including a field 502 for registering the name of the resource and a field 504 for registering a conversion ratio.

In the example of Fig. 7, "memory using mode A" is registered to the record of a first stage as the name of the resource, and "1" is registered to the record of the first stage as the conversion ratio. This shows that the conversion into the memory amount used in the network printer is performed by multiplying the memory amount used in the host terminal 100 by the conversion ratio "1" by the individual function module 130 when the individual function module 130 uses the memory in the using mode A. Similarly, when the individual function module 130 uses the memory in using modes B, C, the conversion ratios corresponding to the using modes B, C are adopted.

The using modes A to C of the memory are determined by a function and a library used by the common function module 120 and the individual function module 130. For example, when the library for treating a variable of an integer type, etc. are used, the using mode A is set. When the library for treating the variable of a double type, etc. are used, the using mode B is set.

"Class number" is registered to the record of a fourth stage as the name of the resource, and "1" is registered to the record of the fourth stage as the conversion ratio. This shows that the conversion into the number of classes started in the network printer is performed by multiplying the number of classes started in the host terminal 100 by the conversion ratio "1" by the individual function module 130.

In the resource conversion table 22, with respect to each of plural test modules, the conversion ratio is determined on the basis of the amount of the resource used by its test module in the host terminal 100 and the network printer, and a maximum value among the conversion ratios determined with respect to the respective test modules is registered to this resource conversion table 22. The generation of the resource conversion table 22 will be described in detail in subsequent embodiment modes.

The memory device 42 further stores a resource managing table for managing the amount of the resource used by the individual function module 130 every each individual function module 130 as a resource managing object. When the individual function module 130 is a resource managing object, the resource managing table is generated in accordance with the starting of the individual function module 130.

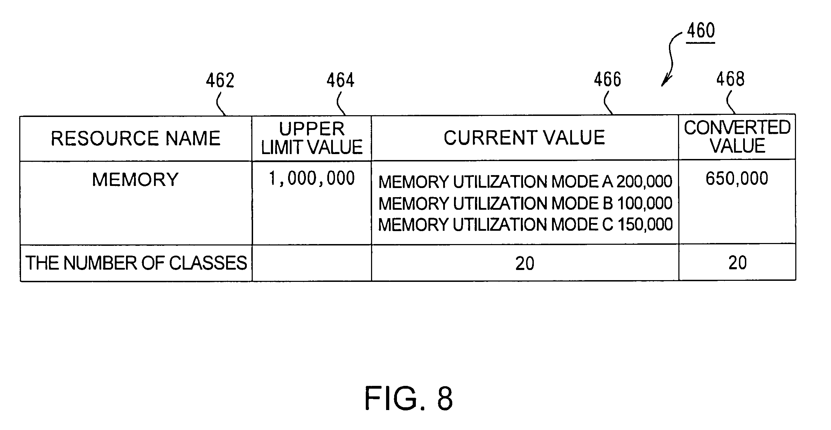

Fig. 8 is a view showing the data structure of the resource managing table 460.

As shown in Fig. 8, one record is registered to the resource managing table 460 every classification of the resource. Each record is registered by including a field 462 for registering the name of the resource, a field 464 for registering an upper limit value of the resource in the network printer by the individual function module 130, a field 466 for registering the amount of the resource used in the host terminal 100 at present by the individual function module 130, and a field 468 for registering a value provided by converting the value of the field 466 into the amount of the resource used in the network printer.

In the example of Fig. 8, "memory" is registered to the record of a first stage as the name of the resource, and "1000000" is registered to the record of the first stage as the upper limit value. Further, "200000", "100000" and "150000" are registered to the record of the first stage as the present value every using modes A to C of the memory, and "650000" is registered to the record of the first stage as the conversion value. This shows that the upper limit value of the memory amount in the network printer is 1000000 [byte] and the individual function module 130 is using 200000 [byte] in using mode A, 100000 [byte] in using mode B and 150000 [byte] in using mode C in the memory at present. Further, this shows that a value (hereinafter called a converted memory amount) converted into the memory amount used in the network printer is 650000 [byte]. The converted memory amount can be calculated as 200000x1+100000x1.5+150000x2=650000 with reference to the resource conversion table 22 of Fig. 7.

"Class number" is registered to the record of a second stage as the name of the resource, and "100" is registered to the record of the second stage as the upper limit value. "20" is registered to the record of the second stage as the present value, and "20" is registered to the record of the second stage as the conversion value. This shows that the upper limit value of the number of classes able to be started by the individual function module 130 in the network printer is 100, and 20 classes are started at present. Further, this shows that a value (hereinafter called a converted class number) converted into the number of classes started in the network printer is 20. The converted class number can be calculated as 20x1=20 with reference to the resource conversion table 22 of Fig. 7.

The memory device 42 further stores an event listener table 480 for registering an event listener for processing an event received by the individual function module 130.

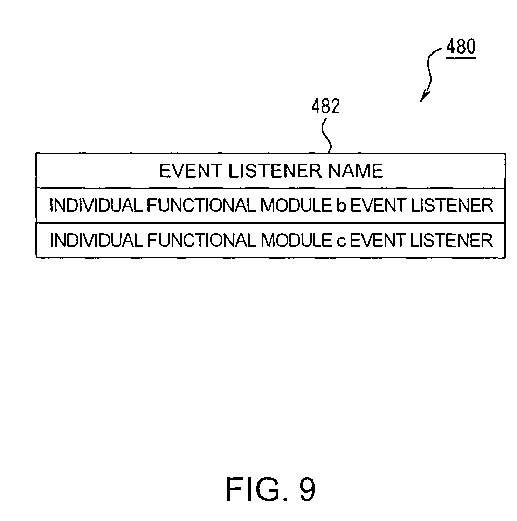

Fig. 9 is a view showing the data structure of the event listener table 480.

As shown in Fig. 9, a record is registered to the event listener table 480 every event listener registered by the individual function module 130. Each record is registered by including a field 482 for registering the name of the event listener.

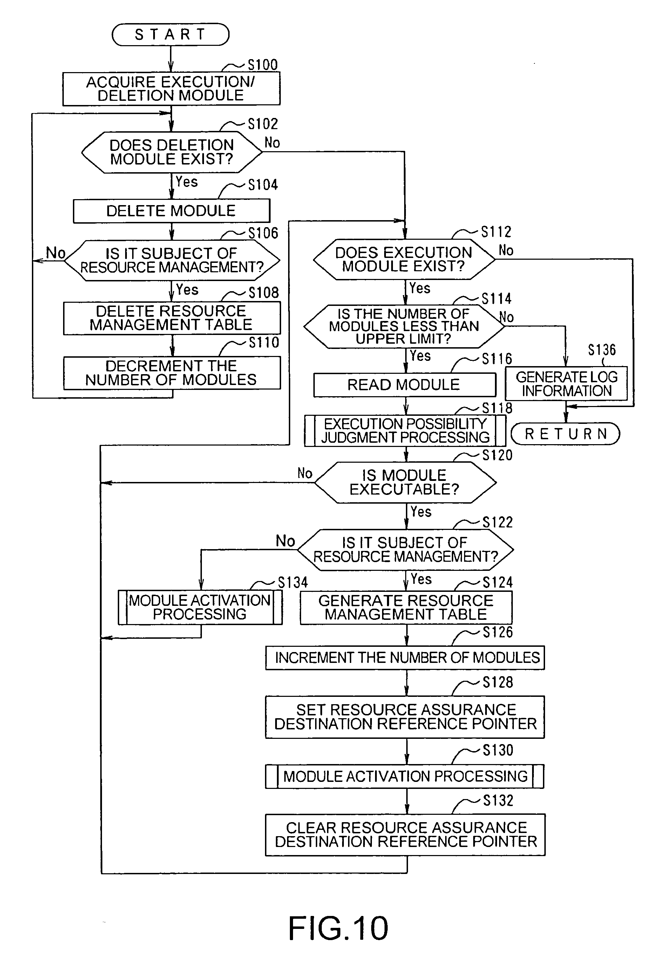

It is returned to Fig. 3 and the CPU 30 is constructed by a micro processing unit, etc., and a predetermined program stored to a predetermined area of the ROM 32 is started. In accordance with this program, individual function module control processing, class reading processing, event listener control processing and instance deletion processing shown in the flow charts of Figs. 10, 14, 15 and 17 are respectively executed in time division as processings of the common function module 120.

The individual function module control processing will first be explained in detail with reference to Fig. 10.

Fig. 10 is a flow chart showing the individual function module control processing.

The individual function module control processing is processing for controlling deletion and execution of the individual function module 130. When this individual function module control processing is executed in the CPU 30, it first proceeds to a step S100 as shown in Fig. 10.

In the step S100, the name of the individual function module 130 to be executed and the name of the individual function module 130 to be deleted are acquired from the executing environment information registering table 440. It then proceeds to a step S102, and it is judged whether the individual function module 130 to be deleted exists or not. When it is judged that the individual function module 130 to be deleted exists (Yes), it proceeds to a step S104.

In the step S104, the pertinent individual function module 130 is deleted from the memory device 42 on the basis of the acquired name, and it proceeds to a step S106. In this step, it is judged whether the pertinent individual function module 130 is a resource managing object on the basis of the module information 420 included in the pertinent individual function module 130 or not. When it is judged that the pertinent individual function module 130 is a resource managing object (Yes), it proceeds to a step S108.

In the step S108, the resource managing table 460 corresponding to the pertinent individual function module 130 is deleted from the memory device 42, and it proceeds to a step S110. In this step, "1" is subtracted from the value of a variable showing the number of modules being started at present, and it proceeds to the step S102.

On the other hand, when it is judged in the step S106 that no pertinent individual function module 130 is a resource managing object (No), it proceeds to the step S102.

On the other hand, when it is judged in the step S102 that no individual function module 130 to be deleted exists (No), it proceeds to a step S112. In this step, it is judged whether the individual function module 130 to be executed exists or not. When it is judged that the individual function module 130 to be executed exists (Yes), it proceeds to a step S114.

In the step S114, it is judged whether the value of the variable showing the number of modules being started at present is less than a predetermined upper limit value or not. When it is judged that the variable value is less than the predetermined upper limit value (Yes), it proceeds to a step S116.

In the step S116, the pertinent individual function module 130 is read from the memory device 42 on the basis of the acquired name, and it proceeds to a step S118. In this step, execution yes/no judgment processing for judging yes/no of the execution of the read individual function module 130 is executed, and it proceeds to a step S120.

In the step S120, it is judged whether a return value showing that the execution of the individual function module 130 is allowed from the execution yes/no judgment processing is returned or not. When it is judged that the return value showing the allowance of the execution is returned (Yes), it proceeds to a step S122.

In the step S122, it is judged whether the pertinent individual function module 130 is a resource managing object on the basis of the module information 420 included in the pertinent individual function module 130 or not. When it is judged that the pertinent individual function module 130 is a resource managing object (Yes), it proceeds to a step S124.

In the step S124, the resource managing table 460 corresponding to the pertinent individual function module 130 is generated and an upper limit value is acquired from the resource limit information 400 included in the pertinent individual function module 130. The acquired upper limit value is registered to the generated resource managing table 460, and it proceeds to a step S126. In this step, "1" is added to the value of the variable showing the number of modules being started at present, and it proceeds to a step S128.

In the step S128, an address of the generated resource managing table 460 is set to a reference pointer of a resource securing destination, and it proceeds to a step S130. In this step, module starting processing for starting the pertinent individual function module 130 is executed, and it proceeds to a step S132. In this step, the reference pointer of the resource securing destination is cleared and it proceeds to the step S112.

On the other hand, when it is judged in the step S122 that no pertinent individual function module 130 is a resource managing object (No), it proceeds to a step S134. In this step, module starting processing similar to that of the step S130 is executed and it proceeds to the step S112.

On the other hand, when it is judged in the step S120 that the return value showing that no execution of the individual function module 130 is allowed from the execution yes/no judgment processing is returned (No), it proceeds to the step S112.

On the other hand, when it is judged in the step S114 that the value of the variable showing the number of modules being started at present is the predetermined upper limit value or more (No), it proceeds to a step S136 and log information showing that the module number has reached the upper limit is generated. A series of processings is terminated and it is returned to the original processing.

On the other hand, when it is judged in the step S112 that no individual function module 130 to be executed exists (No), a series of processings is terminated and it is returned to the original processing.

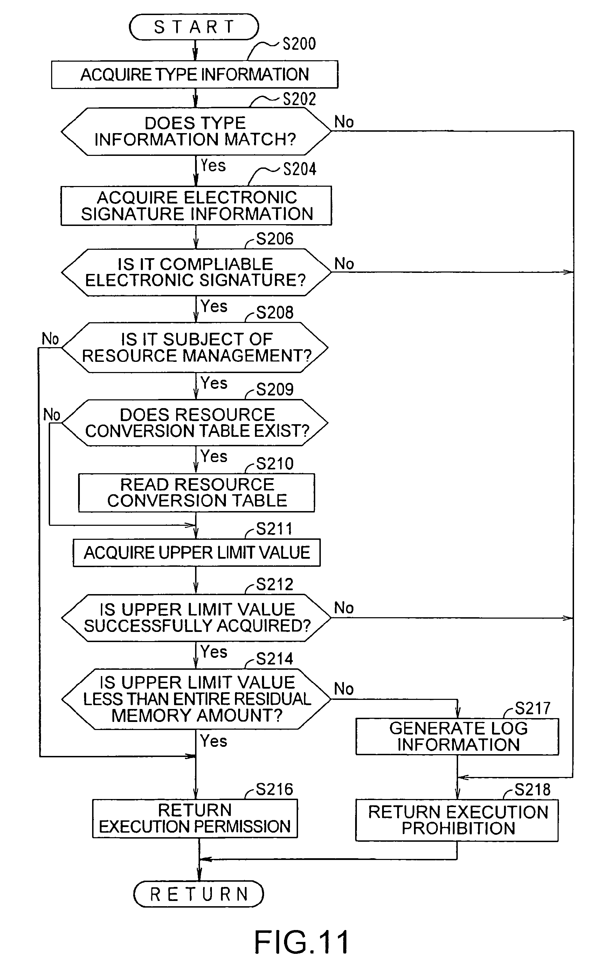

Next, the execution yes/no judgment processing of the step S118 will be explained in detail with reference to Fig. 11.

Fig. 11 is a flow chart showing the execution yes/no judgment processing.

When the execution yes/no judgment processing is executed in the step S118, it first proceeds to a step S200 as shown in Fig. 11.

In the step S200, device kind information is acquired from the module information 420 included in the individual function module 130, and it proceeds to a step S202. In this step, it is judged whether the acquired device kind information and the device kind information of the executing environment information registering table 440 are conformed to each other or not. When it is judged that the acquired device kind information and the device kind information of the executing environment information registering table 440 are conformed (Yes), it proceeds to a step S204.

In the step S204, electronic signature information is acquired from the module information 420 included in the individual function module 130, and it proceeds to a step S206. In this step, it is judged whether the acquired electronic signature information can be coped on the basis of the executing environment information registering table 440 or not. When it is judged that it is the electronic signature information able to be coped (Yes), it proceeds to a step S208.

In the step S208, it is judged whether the individual function module 130 is a resource managing object on the basis of the module information 420 included in the individual function module 130 or not. When it is judged that the individual function module 130 is a resource managing object (Yes), it proceeds to a step S209.

In the step S209, it is judged whether the resource conversion table 22 corresponding to the executing environment information registering table 440 exists or not. When it is judged that the corresponding resource conversion table 22 exists (Yes), it proceeds to a step S210. In this step, the corresponding resource conversion table 22 is read from the memory device 42 and it proceeds to a step S211.

In the step S211, the upper limit value is acquired from the resource limit information 400 included in the individual function module 130, and it proceeds to a step S212. In this step, it is judged whether the acquisition of the upper limit value is successful or not. When it is judged that the acquisition of the upper limit value is successful (Yes), it proceeds to a step S214.

In the step S214, it is judged whether the acquired upper limit value is less than the total memory remaining amount or not. When it is judged that the acquired upper limit value is less than the total memory remaining amount (Yes), it proceeds to a step S216. In this step, the return value showing the allowance of the execution of the individual function module 130 is returned. A series of processings is then terminated and it is returned to the original processing.

In contrast to this, when it is judged in the step S214 that the acquired upper limit value is the total memory remaining amount or more (No), it proceeds to a step S217. In this step, log information showing that the upper limit value is the total memory remaining amount or more is generated, and it proceeds to a step S218. In this step, the return value showing that no execution of the individual function module 130 is allowed is returned. A series of processings is then terminated and it is returned to the original processing.

On the other hand, it proceeds to the step S218 when it is judged in the step S212 that the acquisition of the upper limit value is unsuccessful (No), when it is judged in the step S206 that it is no electronic signature information able to be coped (No), and when it is judged in the step S202 that no device kind information is conformed (No).

On the other hand, it is judged in the step S209 that no resource conversion table 22 corresponding to the executing environment information registering table 440 exists (No), it proceeds to the step S211.

On the other hand, when it is judged in the step S208 that no individual function module 130 is a resource managing object (No), it proceeds to the step S216.

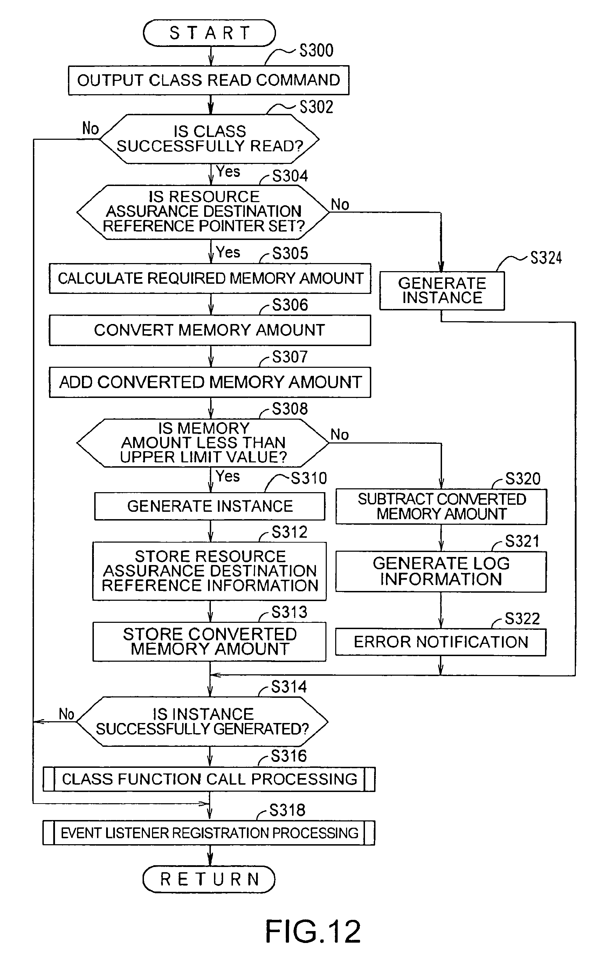

Next, the module starting processing of steps S130, S134 will be explained in detail with reference to Fig. 12.

Fig. 12 is a flow chart showing the module starting processing.

When the module starting processing is executed in steps S130, S134, it first proceeds to a step S300 as shown in Fig. 12.

In the step S300, a class reading command for reading a class is outputted from the individual function module 130, and it proceeds to a step S302. In this step, it is judged whether the reading of the class is successful or not. When it is judged that the reading of the class is successful (Yes), it proceeds to a step S304.

In the step S304, it is judged whether the reference pointer of a resource securing destination is set or not. When it is judged that the reference pointer of the resource securing destination is set (Yes), it proceeds to a step S305. In this step, the memory amount required in the execution of the read class is calculated and it proceeds to a step S306.

In the step S306, the using mode of a memory is specified from a library used in the read class, etc., and the conversion ratio corresponding to the specified using mode of the memory is acquired from the read resource conversion table 22. The calculated memory amount is then multiplied by the acquired conversion ratio. Thus, the conversion into the memory amount used in the network printer is performed.

Next, it proceeds to a step S307, and the converted memory amount is added to a using memory amount of the resource managing table 460 (hereinafter called the reference resource managing table 460) pointed by the reference pointer of the resource securing destination. It then proceeds to a step S308 and it is judged whether the added total memory amount is less than an upper limit value of the reference resource managing table 460 or not. When it is judged that the added total memory amount is less than the upper limit value (Yes), it proceeds to a step S310.

In the step S310, an instance of the read class is generated in the memory, and it proceeds to a step S312. In this step, resource securing destination reference information showing the value of the reference pointer of the resource securing destination is stored to the instance, and it proceeds to a step S313. In this step, the converted memory amount is stored to the generated instance, and it proceeds to a step S314.

In the step S314, it is judged whether the generation of the instance is successful or not. When it is judged that the generation of the instance is successful (Yes), it proceeds to a step S316. In this step, class function call-out processing for calling-out the function of the read class is executed and it proceeds to a step S318. In this step, event listener registration processing for registering an event listener of the individual function module 130 is executed. A series of processings is then terminated and it is returned to the original processing.

On the other hand, when it is judged in the step S308 that the total memory amount is the upper limit value or more (No), it proceeds to a step S320 and the converted memory amount is subtracted from the using memory amount of the reference resource managing table 460, and it then proceeds to a step S321.

In the step S321, log information showing that the memory amount used by the individual function module 130 has reached the upper limit is generated, and it proceeds to a step S322. In this step, an error is notified and it proceeds to the step S314.

On the other hand, when it is judged in the step S304 that no reference pointer of the resource securing destination is set (No), it proceeds to a step S324. In this step, an instance of the read class is generated in the memory, and it proceeds to the step S314.

On the other hand, it proceeds to the step S318 when it is judged in the step S314 that the generation of the instance is unsuccessful (No), and when it is judged in the step S302 that the reading of the class is unsuccessful (No).

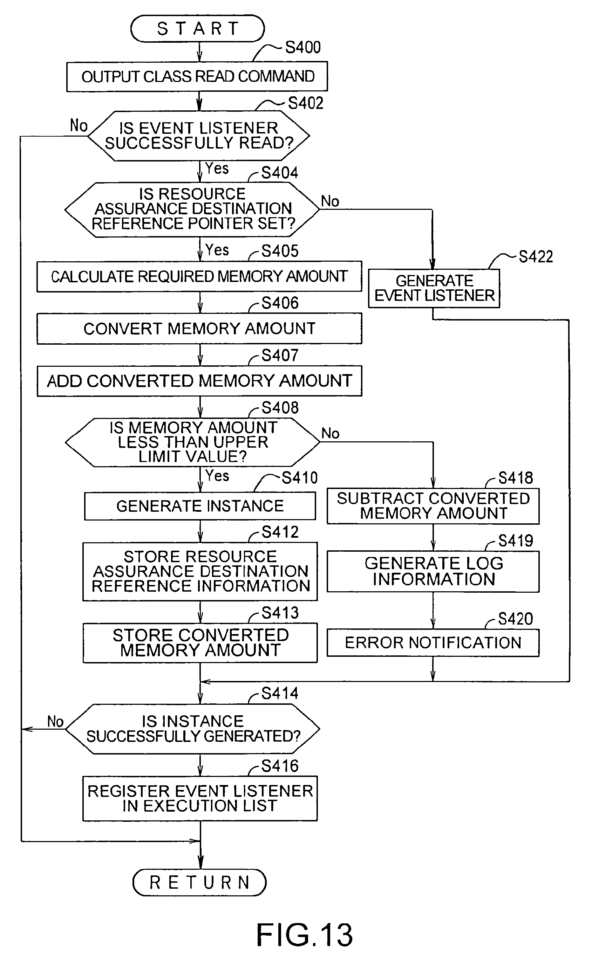

Next, the event listener registration processing of the step S318 will be explained in detail with reference to Fig. 13.

Fig. 13 is a flow chart showing the event listener registration processing.

When the event listener registration processing is executed in the step S318, it first proceeds to a step S400 as shown in Fig. 13.

In the step S400, a class reading command for reading an event listener class is outputted from the individual function module 130, and it proceeds to a step S402. In this step, it is judged whether the reading of the event listener class is successful or not. When it is judged that the reading of the event listener class is successful (Yes), it proceeds to a step S404.

In the step S404, it is judged whether the reference pointer of a resource securing destination is set or not. When it is judged that the reference pointer of the resource securing destination is set (Yes), it proceeds to a step S405. In this step, the memory amount required in the execution of the read event listener class is calculated and it proceeds to a step S406.

In the step S406, the using mode of a memory is specified from a library used in the read event listener class, etc., and the conversion ratio corresponding to the specified using mode of the memory is acquired from the read resource conversion table 22. The calculated memory amount is multiplied by the acquired conversion ratio. Thus, the conversion into the memory amount used in the network printer is performed.

Next, it proceeds to a step S407, and the converted memory amount is added to the using memory amount of the reference resource managing table 460, and it proceeds to a step S408. In this step, it is judged whether the added total memory amount is less than an upper limit value of the reference resource managing table 460 or not. When it is judged that the added total memory amount is less than the upper limit value (Yes), it proceeds to a step S410.

In the step S410, an instance of the read event listener class is generated in the memory, and it proceeds to a step S412. In this step, resource securing destination reference information showing the value of the reference pointer of the resource securing destination is stored to the generated instance. It then proceeds to a step S413, and the converted memory amount is stored to the generated instance, and it proceeds to a step S414.

In the step S414, it is judged whether the generation of the instance is successful or not. When it is judged that the generation of the instance is successful (Yes), it proceeds to a step S416. In this step, an event listener of the generated instance is registered to an event listener executing list. A series of processings is then terminated and it is returned to the original processing.

On the other hand, when it is judged in the step S408 that the total memory amount is the upper limit value or more (No), it proceeds to a step S418. In this step, the converted memory amount is subtracted from the using memory amount of the reference resource managing table 460, and it proceeds to a step S419.

In the step S419, log information showing that the memory amount used by the individual function module 130 has reached the upper limit is generated, and it proceeds to a step S420. In this step, an error is notified and it proceeds to a step S414.

On the other hand, when it is judged in the step S404 that no reference pointer of the resource securing destination is set (No), it proceeds to a step S422. In this step, an instance of the read event listener class is generated in the memory, and it proceeds to the step S414.

On the other hand, when it is judged in the step S414 that the generation of the instance is unsuccessful (No), and when it is judged in the step S402 that the reading of the event listener class is unsuccessful (No), a series of processings is terminated and it is returned to the original processing.

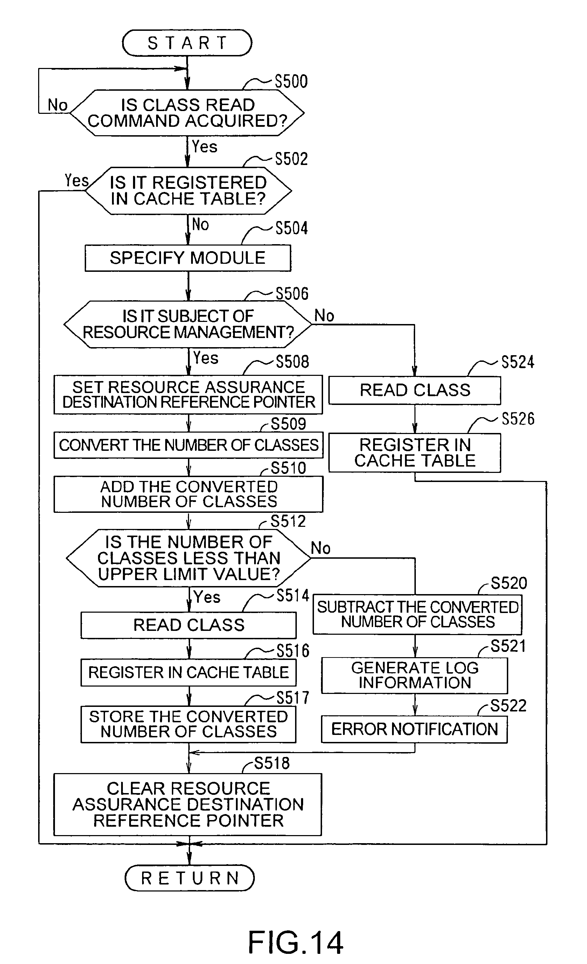

Next, class reading processing will be explained in detail with reference to Fig. 14.

Fig. 14 is a flow chart showing the class reading processing.

The class reading processing is processing for reading a class in accordance with a class reading command. When the class reading processing is executed in the CPU 30, it first proceeds to a step S500 as shown in Fig. 14.

In the step S500, it is judged whether the class reading command is acquired or not. When it is judged that the class reading command is acquired (Yes), it proceeds to a step S502. In contrast to this, when it is judged that no class reading command is acquired (No), it waits in the step S500 until the class reading command is acquired.

In the step S502, it is judged whether a class relating to the class reading command is registered to a cache table or not. When it is judged that no class is registered to the cache table (No), it proceeds to a step S504.

In the step S504, the individual function module 130 to which the class relating to the class reading command belongs is specified. It then proceeds to a step S506, and it is judged whether the pertinent individual function module 130 is a resource managing object on the basis of the module information 420 included in the specified pertinent individual function module 130 or not. When it is judged that the pertinent individual function module 130 is a resource managing object (Yes), it proceeds to a step S508.

In the step S508, the address of the resource managing table 460 corresponding to the pertinent individual function module 130 is set to the reference pointer of the resource securing destination, and it proceeds to a step S509.

In the step S509, the conversion ratio corresponding to the class number is acquired from the read resource conversion table 22, and the conversion into the number of classes started in the network printer is performed by multiplying number "1" of the class relating to the class reading command by the acquired conversion ratio.

Next, it proceeds to a step S510 and the converted class number is added to the starting class number of the reference resource managing table 460. It then proceeds to a step S512 and it is judged whether the added total class number is less than the upper limit value of the reference resource managing table 460 or not. When it is judged that the added total class number is less than the upper limit value (Yes), it proceeds to a step S514.

In the step S514, the class relating to the class reading command is read from the individual function module 130, and it proceeds to a step S516. In this step S516, the read class is registered to the cache table, and it proceeds to a step S517.

In the step S517, the converted class number is stored to the read class, and it proceeds to a step S518. In this step S518, the reference pointer of the resource securing destination is cleared and a series of processings is terminated and it is returned to the original processing.

On the other hand, when it is judged in the step S512 that the total class number is the upper limit value or more (No), it proceeds to a step S520. In this step, the converted class number is subtracted from the starting class number of the reference resource managing table 460, and it proceeds to a step S521.

In the step S521, log information showing that the number of classes started by the individual function module 130 has reached the upper limit is generated. It then proceeds to a step S522, and an error is notified and it proceeds to the step S518.

On the other hand, when it is judged in the step S506 that no pertinent individual function module 130 is a resource managing object (No), it proceeds to a step S524 and the class relating to the class reading command is read from the individual function module 130. It then proceeds to a step S526, and the read class is registered to the cache table. A series of processings is then terminated and it is returned to the original processing.

On the other hand, when it is judged in the step S502 that the class relating to the class reading command is registered to the cache table (Yes), a series of processings is terminated and it is returned to the original processing.

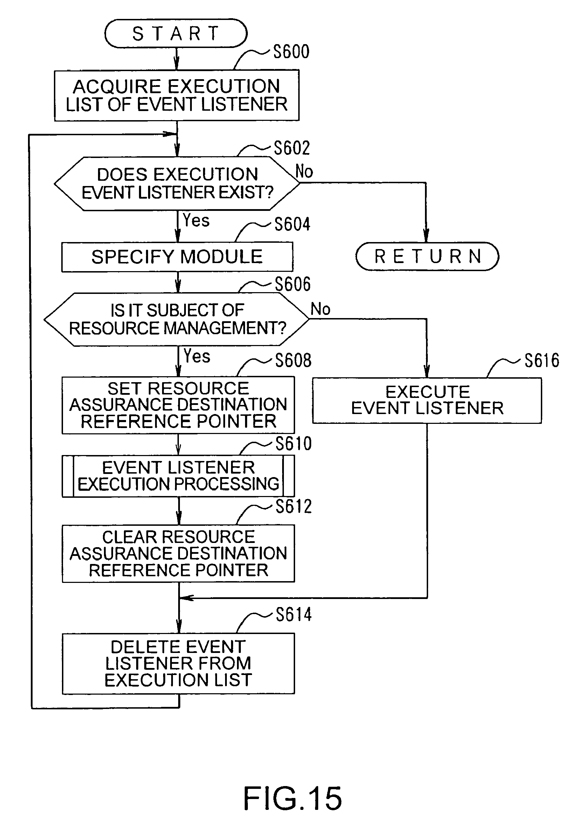

Next, event listener control processing will be explained in detail with reference to Fig. 15.

Fig. 15 is a flow chart showing the event listener control processing.

The event listener control processing is processing for controlling the execution of the event listener. When the event listener control processing is executed in the CPU 30, it first proceeds to a step S600 as shown in Fig. 15.

In the step S600, an event listener executing list is acquired and it proceeds to a step S602. In this step S602, it is judged whether the event listener to be executed exists on the basis of the acquired event listener executing list or not. When it is judged that the event listener to be executed exists (Yes), it proceeds to a step S604.

In the step S604, the individual function module 130 becoming a generating source of the pertinent event listener is specified, and it proceeds to a step S606. In this step, it is judged whether the pertinent individual function module 130 is a resource managing object on the basis of the module information 420 included in the specified pertinent individual function module 130 or not. When it is judged that the pertinent individual function module 130 is a resource managing object (Yes), it proceeds to a step S608.

In this step S608, the address of the resource managing table 460 corresponding to the pertinent individual function module 130 is set to the reference pointer of the resource securing destination, and it proceeds to a step S610. In this step, event listener execution processing for executing the pertinent event listener is executed and it proceeds to a step S612. In this step S612, the reference pointer of the resource securing destination is cleared and it proceeds to a step S614.

In the step S614, the pertinent event listener is deleted from the event listener executing list, and it proceeds to the step S602.

On the other hand, when it is judged in the step S606 that no pertinent individual function module 130 is a resource managing object (No), it proceeds to a step S616. In this step, the pertinent event listener is executed and it proceeds to the step S614.

On the other hand, when it is judged in the step S602 that no event listener to be executed exists (No), a series of processings is terminated and it is returned to the original processing.

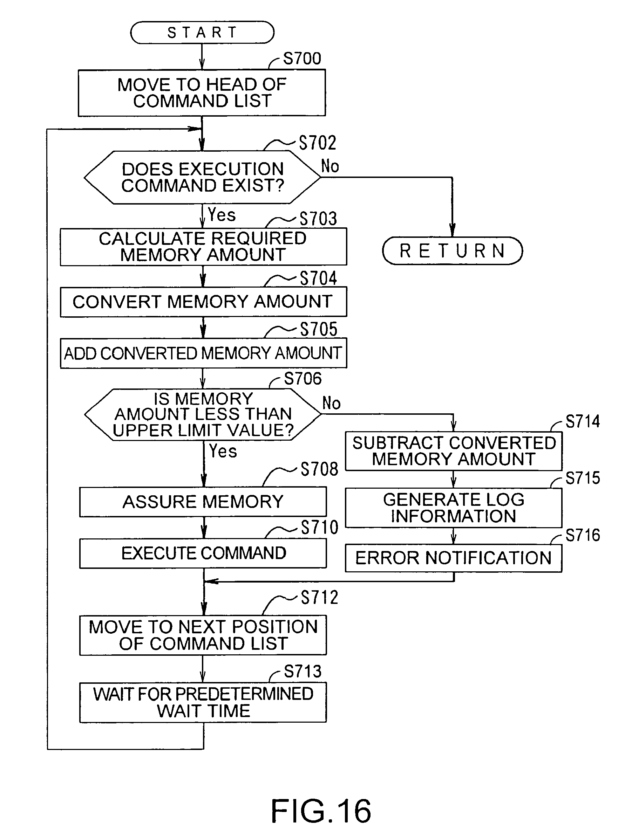

Next, the event listener execution processing of the step S610 will be explained in detail with reference to Fig. 16.

Fig. 16 is a flow chart showing the event listener execution processing.

When the event listener execution processing is executed in the step S610, it first proceeds to a step S700 as shown in Fig. 16.

In the step S700, a program pointer is moved to the head of a command list included in the event listener, and it proceeds to a step S702. In this step, it is judged whether a command to be executed exists at an address pointed by the program pointer or not. When it is judged that the command to be executed exists (Yes), it proceeds to a step S703. In this step, the memory amount required in the execution of the command is calculated and it proceeds to a step S704.

In the step S704, the using mode of a memory is specified from a library used in the execution of the command, etc., and the conversion ratio corresponding to the specified using mode of the memory is acquired from the read resource conversion table 22. The calculated memory amount is multiplied by the acquired conversion ratio. Thus, the conversion into the memory amount used in the network printer is performed.

Next, it proceeds to a step S705 and the converted memory amount is added to the using memory amount of the reference resource managing table 460. It then proceeds to a step S706 and it is judged whether the added total memory amount is less then the upper limit value of the reference resource managing table 460 or not. When it is judged that the added total memory amount is less than the upper limit value (Yes), it proceeds to a step S708.

In the step S708, the memory is secured and it proceeds to a step S710. In this step, the command of the address pointed by the program pointer is executed and it proceeds to a step S712. In this step, the program pointer is moved to the next to the command list included in the event listener, and it proceeds to a step S713. In this step, processing is waited by a predetermined standby time, and it proceeds to the step S702. The determination of this standby time will be described in detail in subsequent embodiment modes.

On the other hand, when it is judged in the step S706 that the total memory amount is the upper limit value or more (No), it proceeds to a step S714. In this step, the converted memory amount is subtracted from the using memory amount of the reference resource managing table 460, and it proceeds to a step S715.

In this step S715, log information showing that the memory amount used by the individual function module 130 has reached the upper limit is generated. It then proceeds to a step S716, and an error is notified and it proceeds to the step S712.

On the other hand, when it is judged in the step S702 that no command to be executed exists (No), a series of processings is terminated and it is returned to the original processing.

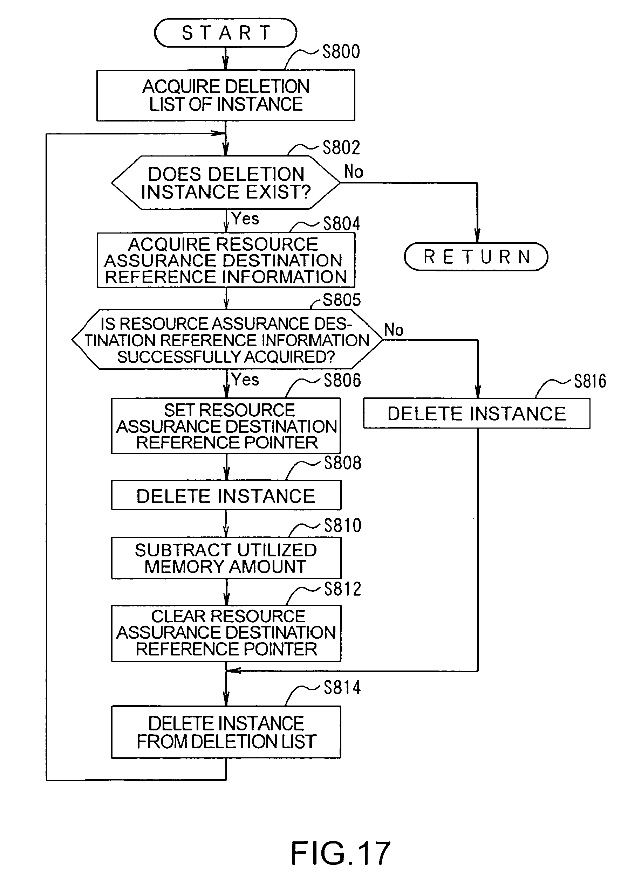

Next, instance deletion processing will be explained in detail with reference to Fig. 17.

Fig. 17 is a flow chart showing the instance deletion processing.

The instance deletion processing is processing for deleting an instance. When the instance deletion processing is executed in the CPU 30, it first proceeds to a step S800 as shown in Fig. 17.

In the step S800, an instance deleting list for registering an instance to be deleted is acquired, and it proceeds to a step S802. In this step, it is judged whether the instance to be deleted exists on the basis of the acquired instance deleting list or not. When it is judged that the instance to be deleted exists (Yes), it proceeds to a step S804.

In the step S804, resource securing destination reference information is acquired from the pertinent instance, and it proceeds to a step S805. In this step, it is judged whether the acquisition of the resource securing destination reference information is successful or not. When it is judged that the acquisition of the resource securing destination reference information is successful (Yes), it proceeds to a step S806.

In the step S806, the reference pointer of the resource securing destination is set on the basis of the acquired resource securing destination reference information, and it proceeds to a step S808. In this step, the pertinent instance is deleted and it proceeds to a step S810. In this step, the memory amount required in the execution of the pertinent instance is subtracted from the using memory amount of the reference resource managing table 460, and it proceeds to a step S812.

In the step S812, the reference pointer of the resource securing destination is cleared and it proceeds to a step S814. In this step, the pertinent instance is deleted from the instance deleting list, and it proceeds to the step S802.

On the other hand, when it is judged in the step S805 that the acquisition of the resource securing destination reference information is unsuccessful (No), it proceeds to a step S816 and the pertinent instance is deleted and it proceeds to the step S814.

On the other hand, when it is judged in the step S802 that no instance to be deleted exists (No), a series of processings is terminated and it is returned to the original processing.

Next, the operation of this embodiment mode will be explained.

First, an executing case of the individual function module 130 as a resource managing object will be explained.

In the host terminal 100, individual function module control processing is executed by the execution of the common function module 120. In the individual function module control processing, when the individual function module 130 to be deleted exists, this individual function module 130 is deleted via steps S102 to S110. Next, when it is judged that the number of modules being started at present is less than a predetermined upper limit value via a step S114, the pertinent individual function module 130 is read and yes/no of the execution of the read individual function module 130 is judged via steps S116, S118. In the execution yes/no judgment processing, the execution of the individual function module 130 is allowed when the individual function module 130 has conformed device kind information and electronic signature information able to be coped and the upper limit value of the usable memory amount is less than the total memory remaining amount.

When the execution of the individual function module 130 is allowed, the resource managing table 460 is generated and "1" is added to the number of modules being started at present and the individual function module 130 is started via steps S124 to S128. In the module starting processing, the starting class number and the using memory amount of the individual function module 130 are converted into a starting class number and a using memory amount in the network printer and are added via steps S509, S510, S305 to S307. At this time, when one of the starting class number and the using memory amount is an upper limit value or more, log information showing that the starting class number or the using memory amount of the individual function module 130 has reached the upper limit is generated, and an error is notified via steps S521, S522 or steps S321, S322. Further, the reading of the class or the generation of the instance is stopped.

In contrast to this, when each of the starting class number and the using memory amount is less than the upper limit value, the class of the individual function module 130 is read and an instance of the read class is generated and an event listener of the individual function module 130 is registered via steps S514, S310, S318. In the event listener registration processing, the starting class number and the using memory amount of the individual function module 130 are converted into the starting class number and the using memory amount in the network printer and are added via steps S509, S510, S405 to S407. At this time, when one of the starting class number and the using memory amount becomes the upper limit value or more, log information showing that the starting class number or the using memory amount of the individual function module 130 has reached the upper limit is generated, and an error is notified via steps S521, S522 or steps S419, S420. Further, the reading of the event listener class or the generation of the instance is stopped.

In contrast to this, when each of the starting class number and the using memory amount is less than the upper limit value, the event listener class is read and an instance of the event listener class is generated, and the event listener of the generated instance is registered to the event listener executing list via steps S514, S410, S416.

On the other hand, in the host terminal 100, event listener control processing is executed by the execution of the common function module 120. In the event listener control processing, the using memory amount of the individual function module 130 becoming a generating source of the event listener to be executed is converted into the using memory amount in the network printer and is added via steps S703 to S705. At this time, when the using memory amount becomes the upper limit value or more, log information showing that the memory mount used in the individual function module 130 has reached the upper limit is generated, and an error is notified, and the execution of the event listener is stopped via steps S715, S716.

In contrast to this, when the using memory amount is less than the upper limit value, a command included in the event listener is executed via a step S710.

On the other hand, in the host terminal 100, instance deletion processing is executed by the execution of the common function module 120. In the instance deletion processing, when an instance to be deleted exists, this instance is deleted and the using memory amount of the individual function module 130 becoming a generating source of this event listener is subtracted via steps S808, S810.

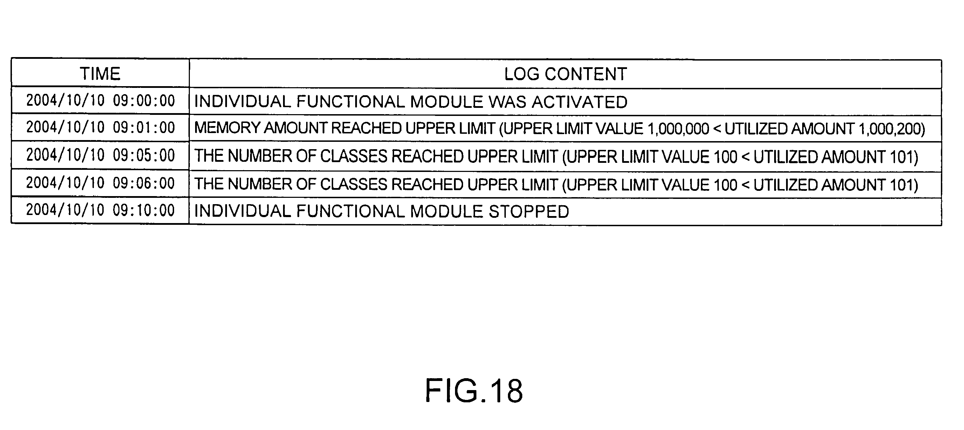

Fig. 18 is a view showing the contents of a log file when an error is generated.

When the error is generated, log information showing that the starting class number or the using memory amount of the individual function module 130 has reached the upper limit is recorded to the log file as well as log information showing that the individual function module 130 is started and stopped as shown in Fig. 18.

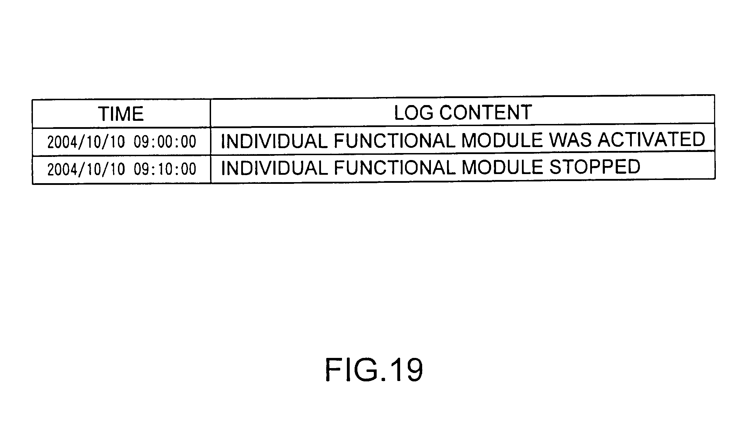

Fig. 19 is a view showing the contents of the log file when no error is generated.

In contrast to this, when no error is generated, only the log information showing that the individual function module 130 is started and stopped is recorded to the log file as shown in Fig. 19.

Next, an executing case of the individual function module 130 not set to a resource managing object will be explained.

In the host terminal 100, when the individual function module control processing is executed, the pertinent individual function module 130 is read, and yes/no of the execution of the read individual function module 130 is judged via steps S116, S118.

When the execution of the individual function module 130 is allowed, the individual function module 130 is started via a step S134. In the module starting processing, the class of the individual function module 130 is read and an instance of the read class is generated, and an event listener of the individual function module 130 is registered via steps S524, S324, S318. In the event listener registration processing, an event listener class is read and an instance of the event listener class is generated and the event listener of the generated instance is registered to the event listener executing list via steps S524, S422, S416.

On the other hand, when the event listener control processing is executed, a command included in the event listener to be executed is executed in the host terminal 100 via a step S616.

On the other hand, when the instance deletion processing is executed and an instance to be deleted exists, this instance is deleted in the host terminal 100 via a step S816.

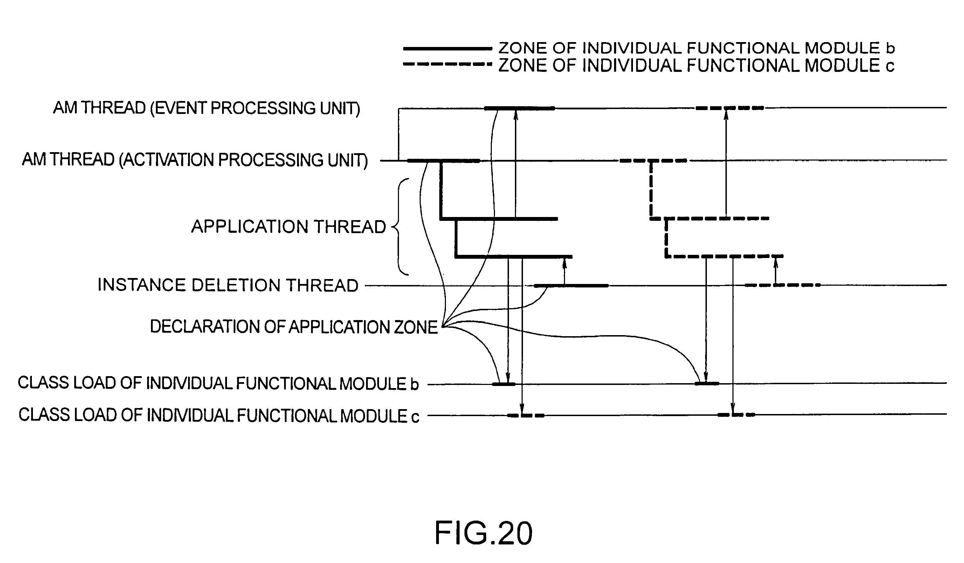

Fig. 20 is a time chart showing a case in which individual function modules b, c becoming a resource managing object are executed in parallel.

In Fig. 20, a solid line shows a thread used in the execution of the individual function module b among a thread of the individual function module b and a thread of the common function module 120. Further, a one-dotted chain line shows a thread used in the execution of the individual function module c among a thread of the individual function module c and the thread of the common function module 120.

When the individual function module b is executed, an AM thread (starting processing section) of the common function module 120 is executed and the individual function module b is started and its thread is executed. Further, the AM thread of the common function module 120 is executed and the event listener of the individual function module b is generated. When an event corresponding to the individual function module b is generated, the AM thread (event processing section) of the common function module 120 is executed, and the class of the individual function module b is read and the read instance is generated. When the individual function module b is unnecessary, an instance deleting thread of the common function module 120 is executed and the instance of the individual function module b is deleted. In this series of processings, the starting class number and the using memory amount increased and decreased in accordance with the execution of the threads of the common function module 120 and the individual function module b are managed as the amount of a resource used by the individual function module b, and are limited so as to be less than predetermined upper limit values set to the individual function module b.

This operation is also similarly performed with respect to the individual function module c. In this series of processings, the starting class number and the using memory amount increased and decreased in accordance with the execution of the threads of the common function module 120 and the individual function module c are managed as the amount of a resource used by the individual function module c, and are limited so as to be less than predetermined upper limit values set to the individual function module c.

Thus, in this embodiment mode, the individual function module 130 measures the amount of the resource used in the host terminal 100, and converts the measured amount of the resource into the amount of the resource used in the network printer. The upper limit value is acquired from the individual function module 130. The log information showing that the amount of the resource used by the individual function module 130 has reached the upper limit is generated on the basis of the converted amount of the resource and the acquired upper limit value.

Thus, the individual function module 130 can verify whether the amount of the resource used in the network printer has reached the upper limit value of the resource before this amount of the resource is introduced into the network printer. Accordingly, in comparison with the former case, software can be easily developed and software high in safety can be developed.

Further, in this embodiment mode, the memory amount used by the individual function module 130, and the memory amount and the starting class number used by the common function module 120 in the execution of its individual function module 130 are measured every each individual function module 130 becoming a resource managing object.

Thus, it is possible to verify whether the amount of the resource used by the common function module 120 in the network printer has reached the upper limit value of the resource in the unit of the individual function module 130.

Further, in this embodiment mode, the securing of the resource using the individual function module 130 is inhibited on the basis of the converted amount of the resource and the acquired upper limit value.

Thus, it is possible to limit that the individual function module 130 uses the amount of the resource by exceeding the upper limit value.

Further, in this embodiment mode, the conversion is performed on the basis of the resource conversion table 22 registering the conversion ratio determined on the basis of the amount of the resource used in the host terminal 100 in a predetermined condition and the amount of the resource used in the network printer in the same predetermined condition.

Thus, the amount of the resource can be comparatively accurately converted between the host terminal 100 and the network printer.

Further, in this embodiment mode, the corresponding conversion ratio is acquired from the resource conversion table 22 in accordance with the classification of the resource used by the common function module 120 and the individual function module 130, and the conversion is performed on the basis of the acquired conversion ratio.

Thus, it is possible to perform the conversion according to the classification of the resource used by the common function module 120 and the individual function module 130. Accordingly, the amount of the resource can be further accurately converted between the host terminal 100 and the network printer.

Further, in this embodiment mode, the corresponding conversion ratio is acquired from the resource conversion table 22 in accordance with the mode of the resource used by the common function module 120 and the individual function module 130, and the conversion is performed on the basis of the acquired conversion ratio.

Thus, it is possible to perform the conversion according to the mode of the resource used by the common function module 120 and the individual function module 130. Accordingly, the amount of the resource can be further accurately converted between the host terminal 100 and the network printer.

Further, in this embodiment mode, with respect to each of plural test modules, the resource conversion table 22 determines the conversion ratio on the basis of the amount of the resource used by its test module in the host terminal 100 and the network printer, and a maximum value among the conversion ratios determined with respect to the respective test modules is registered to the resource conversion table 22.

Thus, the maximum value among the conversion ratios determined with respect to the respective test modules is registered to the resource conversion table 22. Accordingly, the amount of the resource used by the common function module 120 and the individual function module 130 can be estimated a lot. Accordingly, the operation of the individual function module 130 can be comparatively reliably guaranteed.

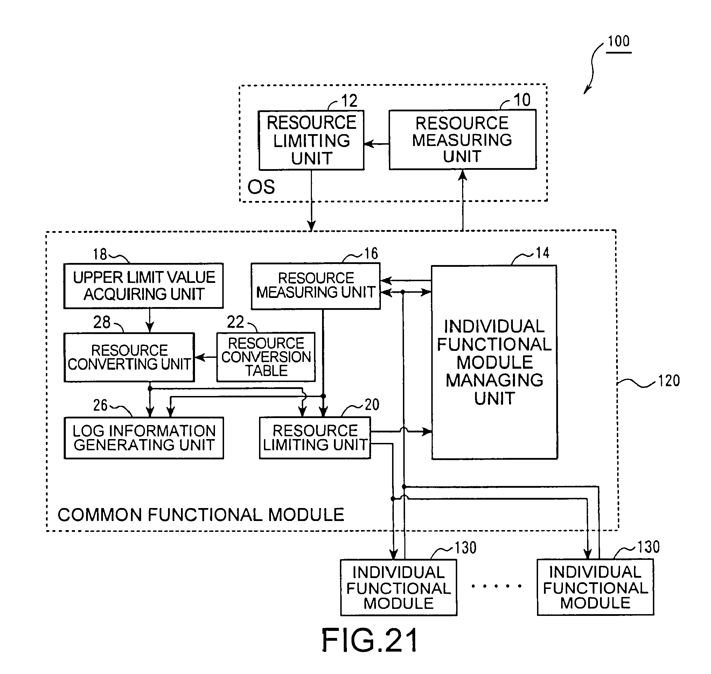

Next, a second embodiment mode of the invention will be explained with reference to the drawings. Figs. 21 to 24 are views showing a resource managing system in the invention and this second embodiment mode.

In this embodiment mode, the resource managing system in the invention and the second embodiment mode are applied to a case in which a JAVA (registered trademark) class set for controlling the operation of the network printer is emulated in an executing environment of the JAVA (registered trademark) application of the host terminal 100 as shown in Fig. 21. The second embodiment mode differs from the above first embodiment mode in that the upper limit value of the resource is converted. In the following description, only portions different from those of the above first embodiment mode will be explained, and portions overlapping with those of the above first embodiment mode are designated by the same reference numerals as the first embodiment mode, and their explanations are omitted.

First, the function of the host terminal 100 applying the invention thereto will be schematically explained.

Fig. 21 is a functional block diagram schematically showing the function of the host terminal 100.

As shown in Fig. 21, the common function module 120 is constructed by arranging an individual function module managing section 14, a resource measuring section 16, an upper limit value acquiring section 18, a resource limiting section 20, a resource conversion table 22, a log information generating section 26 and a resource converting section 28 for converting the amount of a resource.

The resource converting section 28 converts the amount of the resource acquired in the upper limit value acquiring section 18 into an upper limit value of the resource in the host terminal 100 on the basis of the resource conversion table 22.

The resource limiting section 20 limits the amount of the resource used by the individual function module 130 and the amount of the resource used by the individual function module managing section 14 in the execution of its individual function module 130 such that the amount of the resource measured in the resource measuring section 16 is less than the upper limit value converted in the resource converting section 28.

When it is judged that the amount of the resource measured in the resource measuring section 16 is the upper limit value converted in the resource converting section 28 or more, the log information generating section 26 generates log information showing that the amount of the resource used by the individual function module 130 has reached the upper limit.

Next, the construction of the host terminal 100 will be explained in detail.

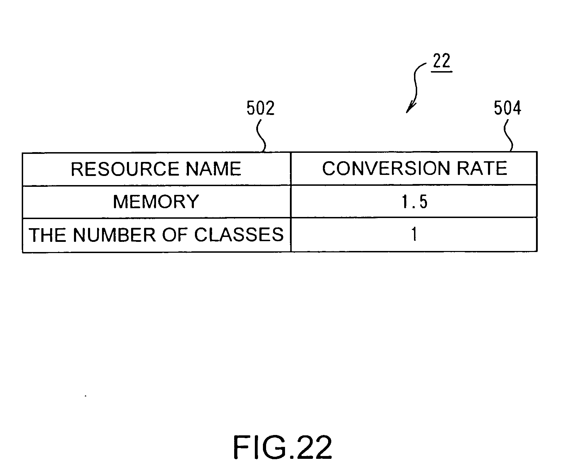

The memory device 42 stores the resource conversion table 22 of Fig. 22 instead of the resource conversion table 22 of Fig. 7.

Fig. 22 is a view showing the data structure of the resource conversion table 22.

As shown in Fig. 22, one record is registered to the resource conversion table 22 every classification or using mode of the resource. Each record is constructed by including a field 502 for registering the name of the resource and a field 504 for registering the conversion ratio.

In the example of Fig. 22, "memory" is registered to the record of a first stage as the name of the resource, and "1" is registered to the record of the first stage as the conversion ratio. This shows that the conversion into the upper limit value of the memory amount in the host terminal 100 is performed by dividing the upper limit value of the memory amount in the network printer by the conversion ratio "1" by the individual function module 130.

Further, "class number" is registered to the record of a second stage as the name of the resource, and "1" is registered to the record of the second stage as the conversion ratio. This shows that the conversion into the number of classes able to be started in the host terminal 100 is performed by dividing the upper limit value of the number of classes able to be started in the network printer by the conversion ratio "1" by the individual function module 130.

With respect to each of the plural test modules, the conversion ratio is determined on the basis of the amount of the resource used by its test module in the host terminal 100 and the network printer, and the maximum value among the conversion ratios determined with respect to the respective test modules is registered to the resource conversion table 22. The generation of the resource conversion table 22 will be described in detail in subsequent embodiment modes.

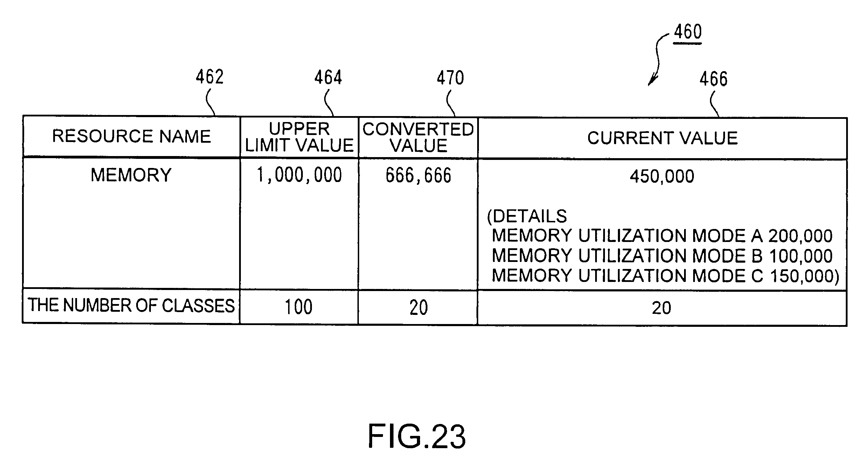

The memory device 42 further stores the resource managing table 460 of Fig. 23 instead of the resource managing table 460 of Fig. 8.

Fig. 23 is a view showing the data structure of the resource managing table 460.

As shown in Fig. 23, one record is registered to the resource managing table 460 every classification of the resource. Each record is registered by including a field 462 for registering the name of the resource, a field 464 for registering an upper limit value of the resource in the network printer by the individual function module 130, a field 470 for registering a value provided by converting the value of the field 464 into the upper limit value of the resource in the host terminal 100, and a field 466 for registering the amount of the resource used at present in the host terminal 100 by the individual function module 130.

In the example of Fig. 23, "1000000" is registered to the record of a first stage as the upper limit value, and "666666" is registered to the record of the first stage as the conversion value. This shows that the upper limit value of the memory amount in the network printer is 1000000 [byte] and a value (hereinafter called a converted memory upper limit value) converted into the upper limit value of the memory amount in the host terminal 100 is 666666 [byte] in the individual function module 130. The converted memory upper limit value can be calculated as 1000000/1.5=666666 with reference to the resource conversion table 22 of Fig. 22.

Further, "100" is registered to the record of a second stage as the upper limit value and "20" is registered to the record of the second stage as the converted value. This shows that the upper limit value of the number of classes able to be started in the network printer is 100 and a value (hereinafter called a converted class upper limit value) converted into the upper limit value of the number of classes able to be started in the host terminal 100 is 20 in the individual function module 130. The converted class upper limit value can be calculated as 20/1=20 with reference to the resource conversion table 22 of Fig. 22.

Next, processing executed in the host terminal 100 will be explained.

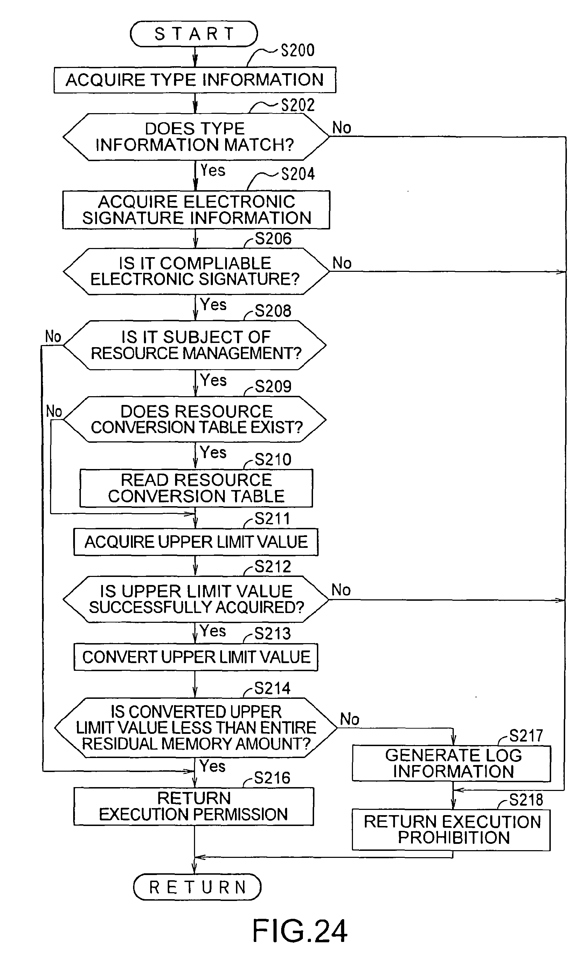

The CPU 30 executes execution yes/no judgment processing shown in the flow chart of Fig. 24 instead of the execution yes/no judgment processing of Fig. 11.

Fig. 24 is a flow chart showing the execution yes/no judgment processing.

When the execution yes/no judgment processing is executed in a step S118, it first proceeds to a step S213 via steps S200 to S212 as shown in Fig. 24.

In the step S213, the conversion ratio corresponding to the acquired upper limit value is acquired from the read resource conversion table 22, and the conversion into the upper limit value in the host terminal 100 is performed by dividing the acquired upper limit value by the acquired conversion ratio.

Next, it proceeds to a step S214, and it is judged whether the converted memory upper limit value is less than the total memory remaining amount or not. When it is judged that the converted memory upper limit value is less than the total memory remaining amount (Yes), it proceeds to a step S216. In contrast to this, when it is judged that the converted memory upper limit value is not less than the total memory remaining amount (No), it proceeds to a step S217.

In the above first embodiment mode, the processings of steps S306, S406, S509, S704 are performed, but these processings are not required in this embodiment mode.

Further, in the above first embodiment mode, the converted memory amount and the converted class number are treated in the processings of steps S313, S320, S418, S517, S520, S714, but the using memory amount and the starting class number in the host terminal 100 are treated in this embodiment mode.

Further, in the above first embodiment mode, the using memory amount and the starting class number in the network printer are treated in steps S308, S408, S512, S706, but a converted memory upper limit value and a converted memory are treated in this embodiment mode.

The operation of this embodiment mode will next be explained.

An executing case of the individual function module 130 becoming a resource managing object will first be explained.

In the host terminal 100, the individual function module control processing is executed by the execution of the common function module 120. In the individual function module control processing, when an individual function module 130 to be deleted exists, this individual function module 130 is deleted via steps S102 to S110. Next, when it is judged that the number of modules being started at present is less than a predetermined upper limit value via a step S114, the pertinent individual function module 130 is read and yes/no of the execution of the read individual function module 130 is judged via steps S116, S118. In the execution yes/no judgment processing, the upper limit value acquired from the resource limit information 400 is converted into an upper limit value in the host terminal 100 via a step S213. With respect to the individual function module 130, its execution is allowed when the individual function module 130 has conformed device kind information and electronic signature information able to be coped and the converted memory upper limit value is less than the total memory remaining amount.

When the execution of the individual function module 130 is allowed, the resource managing table 460 is generated and "1" is added to the number of modules being started at present and the individual function module 130 is started via steps S124 to S128. In the module starting processing, the starting class number and the using memory amount of the individual function module 130 are added via steps S510, S305, S307. At this time, when one of the starting class number and the using memory amount becomes a converted upper limit value (which is called a converted class number or a converted memory upper limit value and is similarly called hereinafter) or more, log information showing that the starting class number or the using memory amount of the individual function module 130 has reached the upper limit is generated and an error is notified and the reading of the class or the generation of the instance is stopped via steps S521, S522 or steps S321, S322.

In contrast to this, when each of the starting class number and the using memory amount is less than the converted upper limit value, the class of the individual function module 130 is read and an instance of the read class is generated and an event listener of the individual function module 130 is registered via steps S514, S310, S318. In the event listener registration processing, the starting class number and the using memory amount of the individual function module 130 are added via steps S510, S405, S407. At this time, when one of the starting class number and the using memory amount becomes the converted upper limit value or more, log information showing that the starting class number or the using memory amount of the individual function module 130 has reached the upper limit is generated, and an error is notified and the reading of the event listener class or the generation of the instance is stopped via steps S521, S522 or steps S419, S420.

In contrast to this, when each of the starting class number and the using memory amount is less than the converted upper limit value, the event listener class is read and an instance of the event listener class is generated and the event listener of the generated instance is registered to the event listener executing list via steps S514, S410, S416.

On the other hand, in the host terminal 100, the event listener control processing is executed by the execution of the common function module 120. In the event listener control processing, the using memory amount of the individual function module 130 becoming a generating source of the event listener to be executed is added via steps S703, S705. At this time, when the using memory amount becomes the converted upper limit value or more, log information showing that the memory amount used by the individual function module 130 has reached the upper limit is generated, and an error is notified and the execution of the event listener is stopped via steps S715, S716.

In contrast to this, when the using memory amount is less than the converted upper limit value, a command included in the event listener is executed via a step S710.

Thus, in this embodiment mode, the amount of the resource used by the individual function module 130 in the host terminal 100 is measured, and the upper limit value is acquired from the individual function module 130. The acquired upper limit value is converted into the upper limit value of the resource in the host terminal 100. The log information showing that the amount of the resource used by the individual function module 130 has reached the upper limit is generated on the basis of the measured amount of the resource and the converted upper limit value.

Thus, it is possible to verify whether the amount of the resource used by the individual function module 130 in the network printer has reached the upper limit value of the resource before this amount of the resource is introduced into the network printer. Accordingly, in comparison with the former case, software can be easily developed and software high in stability can be developed.

In the above second embodiment mode, the resource measuring section 16 and steps S305, S405, S703 correspond to the resource measuring means of modes 1 to 5. Steps S305, S405, S703 correspond to the resource measuring steps of modes 13 to 17, 25 to 32. The resource converting section 28 and step S213 correspond to the resource converting means of modes 1, 2, 4 to 8. Further, step S213 corresponds to the resource converting steps of modes 13, 14, 16 to 20, 25 to 28, 30 to 35. The upper limit value acquiring section 18 and step S211 correspond to the resource upper limit value acquiring means of mode 1, 2 or 4. Step S211 corresponds to the resource upper limit value acquiring steps of modes 13, 14, 16, 25 to 28, 30 or 31.

Further, in the above second embodiment mode, the log information generating section 26 and steps S321, S419, S521, S715 correspond to the resource limit notifying means of mode 1, 2, 4 or 12. Steps S321, S419, S521, S715 correspond to the resource limit notifying steps of modes 13, 14, 16, 24 to 28, 30, 31 or 39. Further, the resource limiting section 20 and steps S308, S408, S512, S706 correspond to the resource limiting means of mode 5. Steps S308, S408, S512, S706 correspond to the resource liming step of mode 17 or 32. The common function module 120 corresponds to the first function modules of modes 2 to 4, 14 to 16, 27 to 31.

Further, in the above second embodiment mode, the individual function module 130 corresponds to the second function modules of modes 2 to 4, 14 to 16, 27 to 31. The CPU 30 corresponds to the arithmetic means of mode 26, 28 or 31.

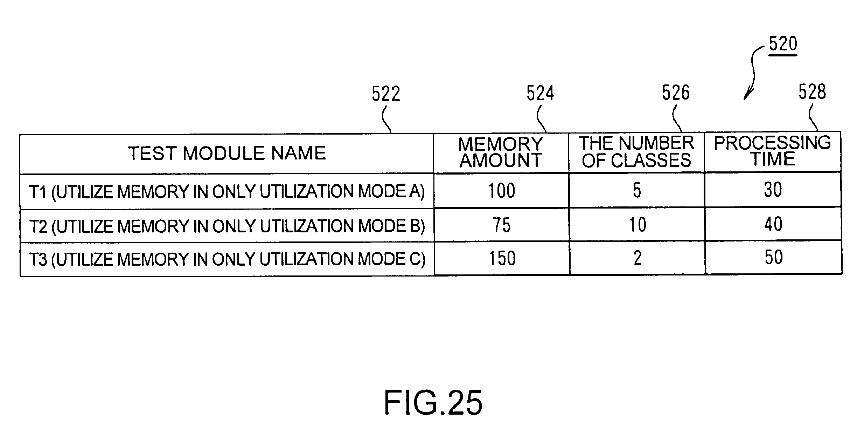

Next, a third embodiment mode of the invention will be explained with reference to the drawings. Figs. 25 to 30 are views showing a resource managing program in the invention and this embodiment mode.

In this embodiment mode, the resource managing program in the invention and this embodiment mode are applied to a case in which the resource conversion table 22 used in the above first and second embodiment modes is generated. In the following description, only portions different from those of the above first and second embodiment modes will be explained, and portions overlapping with those of the above first and second embodiment modes are designated by the same reference numerals as the first and second embodiment modes, and their explanations are omitted.

First, the construction of the network printer will be explained in detail.

The network printer is constructed by arranging the same function as a general computer in which a CPU, a ROM, a RAM, an I/F, etc. are connected by a bus.

An operation panel constructed by a touch panel, etc. able to input and display data as a human interface, a memory device for storing data, a table, etc. as a file, a printer engine constructed by a print head, a head driving portion and other mechanisms required in printing, and a signal line for connection to a network 199 are connected to the I/F as an external device.

The memory device stores an executing result registering table for registering an executing result obtained by executing a test module in the network printer.

Fig. 25 is a view showing the data structure of the executing result registering table 520.

As shown in Fig. 25, one record is registered to the executing result registering table 520 every each test module. Each record is registered by including a field 522 for registering the name of the test module, a field 524 for registering the memory amount used by the test module in the network printer, a field 526 for registering the number of classes started by the test module in the network printer, and a field 528 for registering a processing time of the test module.

In the example of Fig. 25, "T1 (a memory is used in only a using mode A) is registered to the record of a first stage as the name of the test module, and "100" is registered to the record of the first stage as the memory amount, and "5" is registered to the record of the first stage as the class number, and "30" is registered to the record of the first stage as the processing time. This shows that the memory is used in only the using mode A in the test module T1, and 100 [byte] is used in the memory amount in the network printer by executing this test module T1, and 30 classes are started.

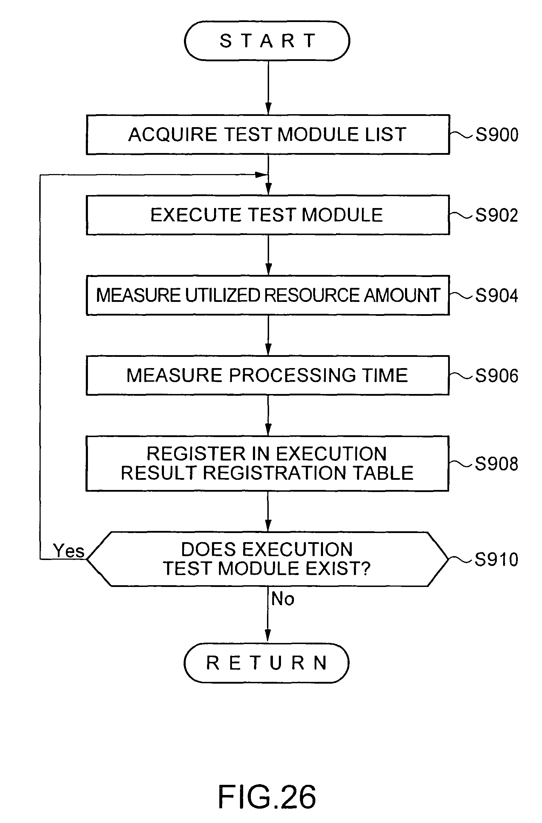

The CPU starts a predetermined program stored to a predetermined area of the ROM, and executes using resource amount measurement processing shown in the flow chart of Fig. 26 in accordance with this program.

Fig. 26 is a flow chart showing the using resource amount measurement processing.

When the using resource amount measurement processing is executed in the CPU, it first proceeds to a step S900 as shown in Fig. 26.

In the step S900, a test module list for registering the test module to be executed is acquired, and it proceeds to a step S902. In this step, the test module is executed on the basis of the acquired test module list, and it proceeds to a step S904.

In the step S904, the memory amount and the starting class number used by the executed test module are measured, and it proceeds to a step S906. In this step, the processing time of the executed test module is measured, and it proceeds to a step S908. In this step, the measured using memory amount, starting class number and measurement time are registered to the executing result registering table 520 by making these measured values correspond to the name of the test module, and it proceeds to a step S910.

In the step S910, it is judged whether the test module to be executed exists on the basis of the acquired test module list or not. When it is judged that the test module to be executed exists (Yes), it proceeds to a step S902. In contrast to this, when it is judged that no test module to be executed exists (No), a series of processings is terminated and it is returned to the original processing.

The executing result registering table 520 obtained by the using resource amount measurement processing is used to generate the resource conversion table 22 in the host terminal 100.

Next, the construction of the host terminal 100 will be explained in detail.

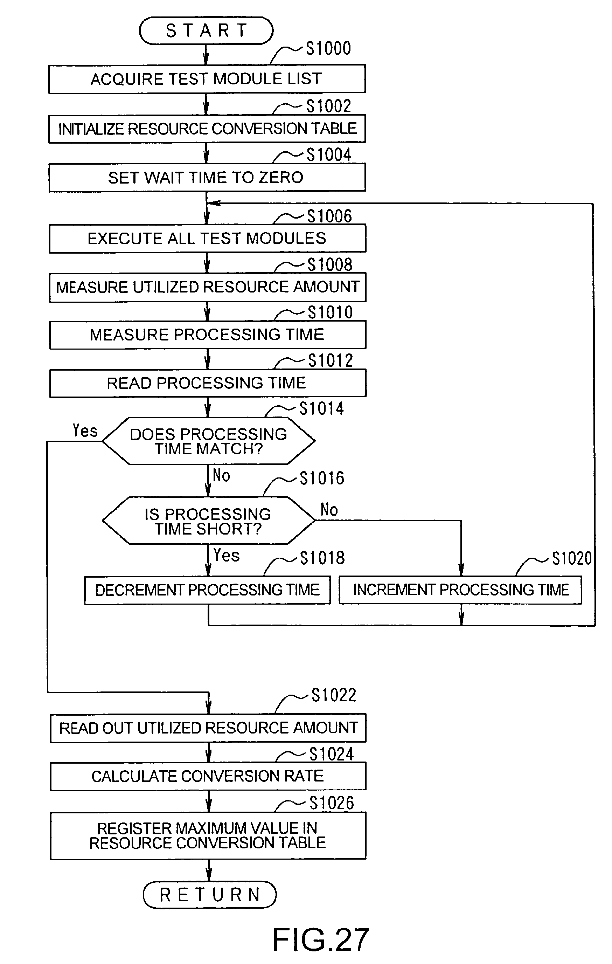

The CPU 30 starts a predetermined program stored to a predetermined area of the ROM 32, and executes resource conversion table generation processing shown in the flow chart of Fig. 27 in accordance with this program.

Fig. 27 is a flow chart showing the resource conversion table generation processing.

The resource conversion table generation processing is processing for generating the resource conversion table 22 and determining a standby time in a step S713. When the resource conversion table generation processing is executed in the CPU 30, it first proceeds to a step S1000 as shown in Fig. 27.

In the step S1000, the test module list is acquired and it proceeds to a step S1002. In this step, the resource conversion table 22 is initialized and it proceeds to a step S1004. In this step, the standby time is set to "0" and it proceeds to a step S1006.

In the step S1006, all test modules are executed on the basis of the acquired test module list. Here, similar to the individual function module 130, the test modules are executed by processings shown in the flow charts of Figs. 10 to 17, and 24. Accordingly, the processing time is adjusted by waiting the processing in the step S713 by the standby time.

Next, it proceeds to a step S1008, and the memory amount and the starting class number used by each executed test module are measured. It then proceeds to a step S1010 and the processing time of each executed test module is measured and it proceeds to a step S1012.

In the step S1012, the processing time corresponding to each test module is read out of the executing result registering table 520, and it proceeds to a step S1014. In this step, it is judged whether or not the total of the read processing time and the total of the processing time measured with respect to each test module are conformed or the difference therebetween is a predetermined threshold value or less. When it is judged that no totals of the processing time are conformed or the difference therebetween is greater than the predetermined threshold value (No), it proceeds to a step S1016.

In the step S1016, it is judged whether the total of the read processing time is shorter than the total of the processing time measured with respect to each test module or not. When it is judged that the total of the read processing time is shorter than the total of the measured processing time (Yes), it proceeds to a step S1018 and "1" is subtracted from the standby time and it proceeds to the step S1006.

On the other hand, when it is judged in the step S1016 that the total of the processing time measured with respect to each test module is shorter than the total of the read processing time (No), it proceeds to a step S1020 and "1" is added to the standby time and it proceeds to the step S1006.

On the other hand, it is judged in the step S1014 that the totals of the processing time are conformed or the difference therebetween is the predetermined threshold value or less (Yes), it proceeds to a step S1022 and the using memory amount and the starting class number corresponding to each test module are read out of the executing result registering table 520 and it proceeds to a step S1024.

In the step S1024, the conversion ratio is calculated every each test module on the basis of the using memory amount and the starting class number measured with respect to its test module, and the using memory amount and the starting class number corresponding to its test module among the read using memory amount and starting class number. It then proceeds to a step S1026 and a maximum value among the conversion ratios calculated with respect to the respective test modules is registered to the resource conversion table 22 every classification and using mode of the resource. Then, a series of processings is terminated and it is returned to the original processing.

The operation of this embodiment mode will next be explained.

In the network printer, each test module is executed by repeating steps S902 to S908, and the using memory amount, the starting class number and the processing time of each executed test module are measured. The measured using memory amount, starting class number and processing time are registered to the executing result registering table 520.

Next, the executing result registering table 520 obtained in the network printer is stored to the host terminal 100, and resource conversion table generation processing is executed in the host terminal 100.

In the host terminal 100, each test module is executed and the processing time of each executed test module is measured via steps S1006 to S1010. The processing time corresponding to each test module is read out of the executing result registering table 520, and it is judged whether the total of the read processing time and the total of the processing time measured with respect to each test module are conformed or not via steps S1012, S1014. As its result, when it is judged that no totals of the processing time are conformed and when the total of the read processing time is shorter than the total of the measured processing time, the standby time is subtracted via the step S1018. In contrast to this, when the total of the processing time measured with respect to each test module is shorter than the total of the read processing time, the standby time is added via the step S1020. The processings of steps 1006 to S1020 are repeatedly performed until the totals of the processing time are conformed.

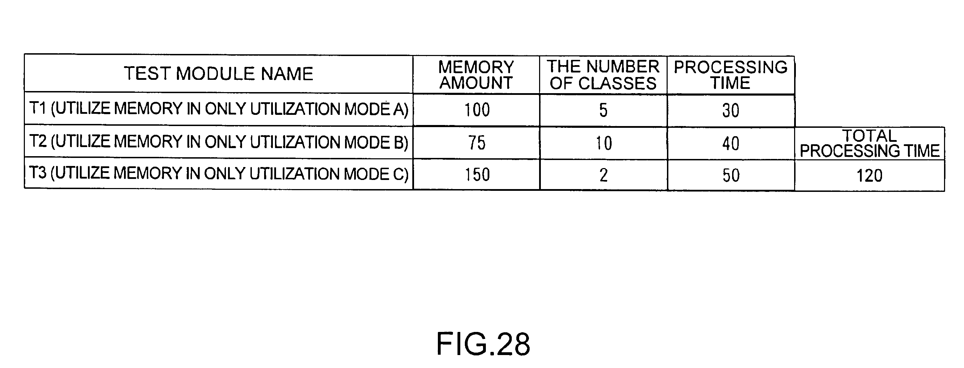

Fig. 28 is a table showing executing results when three test modules T1 to T3 are executed in the network printer.

When the test modules T1 to T3 are executed in the network printer, the total of the processing times of the test modules T1 to T3 becomes e.g., "120" as shown in Fig. 28.

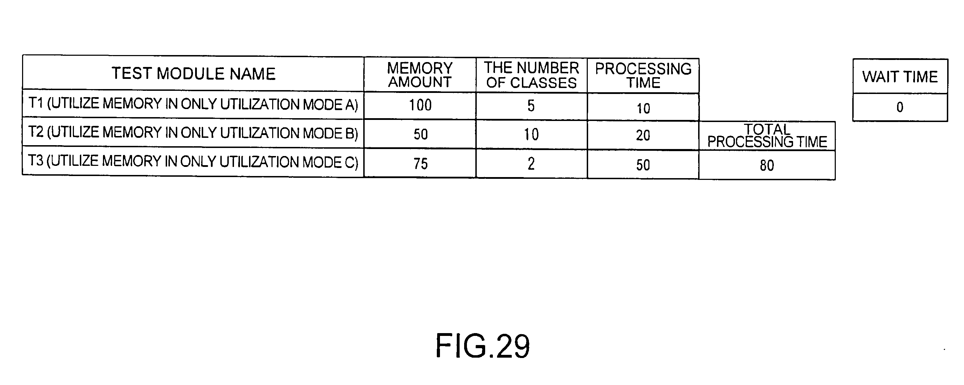

Fig. 29 is a table showing executing results when the standby time is set to "0" and the three test modules T1 to T3 are executed in the host terminal 100.

When the standby time is set to "0" and the test modules T1 to T3 are executed in the host terminal 100, the total of the processing times of the test modules T1 to T3 becomes e.g., "80" as shown in Fig. 29. In this case, since the total of the processing time in the network printer and the total of the processing time in the host terminal 100 are not conformed, the standby time is added and the processing time is adjusted.

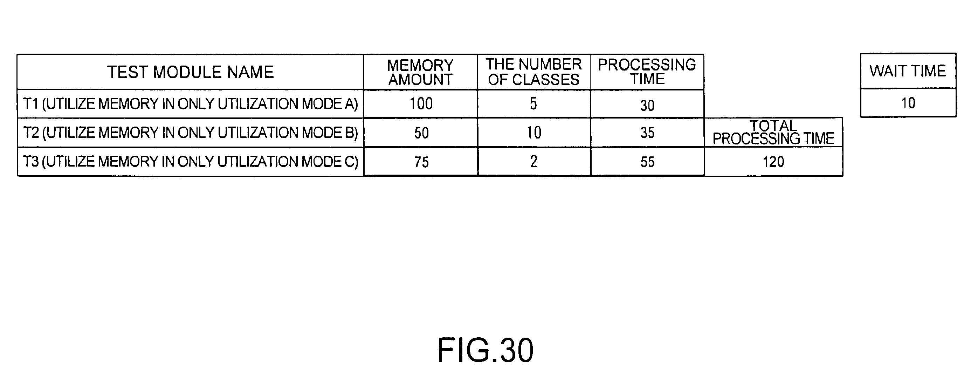

Fig. 30 is a table showing executing results when the standby time is set to "10" and the three test modules T1 to T3 are executed in the host terminal 100.

Next, when the standby time is set to "10" and the test modules T1 to T3 are executed in the host terminal 100, the total of the processing times of the test modules T1 to T3 becomes e.g., "120" as shown in Fig. 30. In this case, since the total of the processing time in the network printer and the total of the processing time in the host terminal 100 are conformed, the standby time is determined as "10".

When the standby time is thus determined, the using memory amount and the starting class number corresponding to each test module are read out of the executing result registering table 520, and the conversion ratio is calculated every each test module on the basis of the measured using memory amount and starting class number, and the read using memory amount and starting class number via steps S1022, S1024. A maximum value among the conversion ratios calculated with respect to the respective test modules is then registered to the resource conversion table 22 via a step S1026.

The standby time and the resource conversion table 22 obtained by such processing can be used in the above first and second embodiment modes.

Thus, in this embodiment mode, the test module reads the amount of the resource used in the network printer from the executing result registering table 520. The test module measures the amount of the resource used in the host terminal 100. The conversion ratio is calculated on the basis of the read amount of the resource and the measured amount of the resource. The resource conversion table 22 is generated on the basis of the calculated conversion ratio.

Thus, since it is sufficient to execute the test module in the host terminal 100 and the network printer, the resource conversion table 22 can be easily generated.

Further, in this embodiment mode, the processing time of the test module in the network printer is read out of the executing result registering table 520, and the processing time of the test module in the host terminal 100 is measured. The standby time in the host terminal 100 is calculated on the basis of the read processing time and the measured processing time.

Thus, when the individual function module 130 is executed in the host terminal 100, the processing times of the individual function module 130 can be adjusted so as to be equal in the host terminal 100 and the network printer if the obtained standby time is set during the execution.

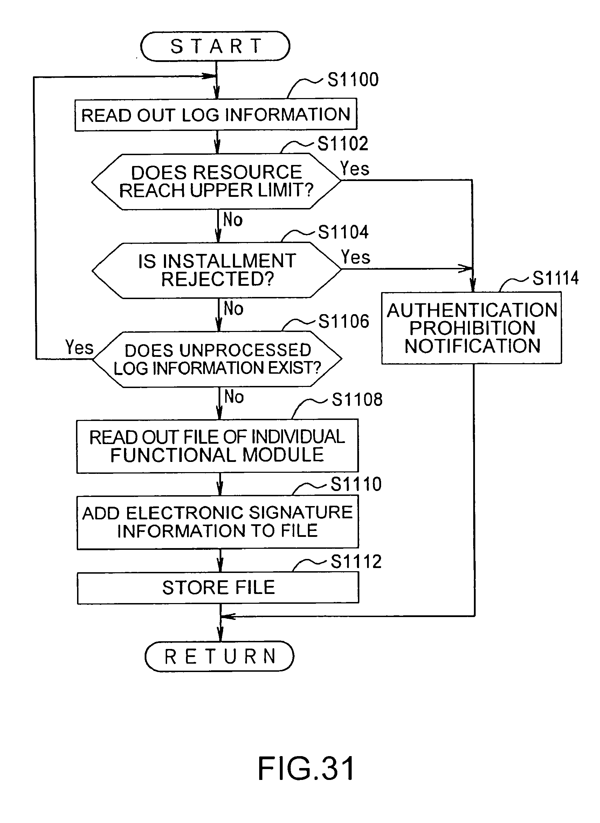

Next, a fourth embodiment mode of the invention will next be explained with reference to the drawings. Fig. 31 is a view showing a resource managing method in the invention and this embodiment mode.

In this embodiment mode, the resource managing method in the invention and this embodiment mode are applied to a case in which the individual function module 130 is authenticated on the basis of the log information generated in the above first and second embodiment modes. In the following description, only portions different from those of the above first and second embodiment modes will be explained, and portions overlapping with those of the above first and second embodiment modes are designated by the same reference numerals as the above first and second embodiment modes, and their explanations are omitted.

The construction of the host terminal 100 will first be explained in detail.

The CPU 30 starts a predetermined program stored to a predetermined area of the ROM 32, and executes module authentication processing shown in the flow chart of Fig. 31 in accordance with this program.

Fig. 31 is the flow chart showing the module authentication processing.

When the module authentication processing is executed in the CPU 30, it first proceeds to a step S1100 as shown in Fig. 31.

In the step S1100, log information is read out of a log file of the memory device 42, and it proceeds to a step S1102. In this step, it is judged whether the starting class number or the using memory amount of the individual function module 130 has reached an upper limit on the basis of the read log information or not. When it is judged that the starting class number or the using memory amount does not have reached the upper limit (No), it proceeds to a step S1104.

In the step S1104, it is judged whether no individual function module 130 can be installed to the network printer on the basis of the read log information or not. When it is judged that the individual function module 130 can be installed (No), it proceeds to a step S1106.

In the step S1106, it is judged whether unprocessed log information exists in the log file of the memory device 42 or not. When it is judged that no unprocessed log information exists (No), it proceeds to a step S1108. In this step, an executing file of the individual function module 130 is read out of the memory device 42, and it proceeds to a step S1110.

In the step S1110, electronic signature information is added to the read executing file, and it proceeds to a step S1112. In this step, the executing file adding the electronic signature information thereto is stored to the memory device 42, and a series of processings is terminated and it is returned to the original processing.

On the other hand, when it is judged in the step S1106 that the unprocessed log information exists (Yes), it proceeds to a step S1100.

On the other hand, it proceeds to a step S1114 when it is judged in the step S1104 that no individual function module 130 can be installed (Yes), and when it is judged in the step S1102 that the starting class number or the using memory amount has reached the upper limit (Yes). In this step S1114, a message showing that no individual function module 130 can be authenticated is displayed in the display device 44, and a series of processings is terminated and it is returned to the original processing.

The operation of this embodiment mode will next be explained.

When the log file is generated in the above first and second embodiment modes, the log information is sequentially read out of the log file in the host terminal 100 via the repetition of steps S1100 to S1106. It is then judged whether the starting class number or the using memory amount of the individual function module 130 has reached the upper limit or not. It is also judged whether no individual function module 130 can be installed to the network printer or not. When it is judged that the starting class number or the using memory amount does not have reached the upper limit and the individual function module 130 can be installed to the network printer with respect to all log information included in the log file as in the log file shown in Fig. 19, the executing file of the individual function module 130 is read out, and electronic signature information is added to the read executing file and is stored via steps S1108 to S1112.

In contrast to this, when it is judged that the starting class number or the using memory amount has reached the upper limit or no individual function module 130 can be installed to the network printer with respect to one log information included in the log file as in the log file shown in Fig. 18, a message showing that no authentication can be performed is displayed via a step S1114.

Thus, in this embodiment mode, the log information is read out of the log file and it is judged whether the amount of the resource used by the individual function module 130 has reached the upper limit on the basis of the read log information or not. When it is judged that no amount of the resource has reached the upper limit, electronic authentication information is added to the executing file of the individual function module 130.

Thus, the electronic signature information is added to only the individual function module 130 in which no used amount of the resource has reached the upper limit. Accordingly, the operation of the individual function module 130 can be comparatively reliably guaranteed.

Further, in this embodiment mode, the log information is read out of the log file, and it is judged whether no individual function module 130 can be installed to the network printer on the basis of the read log information or not. When it is judged that the individual function module 130 can be installed to the network printer, the electronic authentication information is added to the executing file of the individual function module 130.

Thus, since the electronic signature information is added to only the individual function module 130 able to be installed to the network printer, the operation of the individual function module 130 can be further reliably guaranteed.

In the above first and second embodiment modes, the resource conversion table 22 is constructed by registering the maximum value among the conversion ratios determined with respect to the respective test modules. However, the invention is not limited to this case, but the resource conversion table 22 can be also constructed by registering an average value among the conversion ratios determined with respect to the respective test modules.

Thus, since the average value among the conversion ratios determined with respect to the respective test modules is registered to the resource conversion table 22, the operation of the function module can be guaranteed with reliability of a certain degree, and the amount of the resource used in the network printer can be restrained.

Further, the above first and second embodiment modes are constructed so as to generate the log information showing that the amount of the resource used by the individual function module 130 has reached the upper limit. However, the invention is not limited to this construction, but can be also constructed such that a message showing that the amount of the resource used by the individual function module 130 has reached the upper limit is displayed in the display device 44.

Further, the above first and second embodiment modes shows the example in which "1" is registered to the resource conversion table 22 as the conversion ratio. However, the invention is not limited to this example, but a value except for "1" can be also registered to the resource conversion table 22 in accordance with the difference in specification between the host terminal 100 and the network printer.

Further, the above first and second embodiment modes are constructed so as to limit the using memory amount and the starting class number as the amount of the resource. However, the invention is not limited to this case, but can be also constructed so as to limit a socket connecting number, a file connecting number, a file number, file capacity, a class size, ZIP memory capacity, a CPU utilizing amount, a socket communication amount and file reading and writing amounts.

Further, in the above first to fourth embodiment modes, the executing case of the control program stored to the ROM 32 in advance has been explained when each of the processings shown in the flow charts of Figs. 10 to 17, 24, 27 and 31 is executed. However, the invention is not limited to this case, but a program showing these procedures may be read to the RAM 34 from a memory medium storing this program and may be also executed.

Further, in the above third embodiment mode, the executing case of the control program stored to the ROM of the network printer in advance has been explained in any case when the processing shown in the flow chart of Fig. 26 is executed. However, the invention is not limited to this case, but a program showing these procedures may be read to the RAM of the network printer from a memory medium storing this program and may be also executed.

Here, the memory medium includes all memory media if these memory media are memory media which are a semiconductor memory medium of RAM, ROM, etc., a magnetic memory type memory medium of FD, HD, etc., an optical reading system memory medium of CD, CDV, LD, DVD, etc., a magnetic memory type/optical reading system memory medium of MO, etc., and can be read by a computer irrespective of electronic, magnetic, optical reading methods, etc.

Further, in the above first to fourth embodiment modes, the resource managing system, the resource managing program and the resource managing method in the invention are applied to the case in which the JAVA (registered trademark) class set for controlling the operation of the network printer is emulated in the executing environment of the JAVA (registered trademark) application of the host terminal 100. However, the invention is not limited to this case, but can be also applied to other cases in the scope not departing from the gist of the invention. Instead of the network printer, for example, the invention can be applied to a projector, electronic paper, a home gate way, a personal computer, PDA (Personal Digital Assistant), a network storage, an audio device, a portable telephone, PHS (registered trademark) (Personal Handyphone System), watch type PDA, STB (Set Top Box), a POS (Point Of Sale) terminal, a FAX machine, a telephone (also including an IP telephone, etc.), and other devices.

## Claims

1. A resource managing system for managing a resource used by a function module, comprising:
a resource measuring device for measuring the amount of the resource used by the function module in a first executing environment; a resource upper limit value acquiring device for acquiring an upper limit value of the resource in a second executing environment; a resource converter device for converting the upper limit value of the resource acquired in the resource upper limit value acquiring device into an upper limit value of the resource in the first executing environment; and a resource limit notifying device for performing notification relating to the limit of the resource on the basis of the amount of the resource measured in the resource measuring device and the upper limit value of the resource converted in the resource converter device.

2. A resource managing system for managing a resource used by a first function module and plural second function modules requiring the first function module in its execution, comprising:
a resource measuring device for measuring the amount of the resource used by the second function module in the first executing environment; a resource upper limit value acquiring device for acquiring an upper limit value of the resource in a second executing environment; a resource converter device for converting the upper limit value of the resource acquired in the resource upper limit value acquiring device into an upper limit value of the resource in the first executing environment; and a resource limit notifying device for performing notification relating to the limit of the resource on the basis of the amount of the resource measured in the resource measuring device and the upper limit value of the resource converted in the resource converter device.

3. The resource managing system according to claim 2, wherein the resource measuring device measures the amount of the resource used by the second function module in the first executing environment and the amount of the resource used by the first function module in the execution of the second function module in the first executing environment.

4. A resource managing system for managing a resource used by a first function module and plural second function modules requiring the first function module in its execution, comprising:
a resource measuring device for measuring the amount of the resource used by the first function module in the execution of the second function module in the first executing environment; a resource upper limit value acquiring device for acquiring an upper limit value of the resource in a second executing environment; a resource converter device for converting the upper limit value of the resource acquired in the resource upper limit value acquiring device into an upper limit value of the resource in the first executing environment; and a resource limit notifying device for performing notification relating to the limit of the resource on the basis of the amount of the resource measured in the resource measuring device and the upper limit value of the resource converted in the resource converter device.

5. The resource managing system according to claim 2, wherein the resource managing system further comprises a resource limiting device for inhibiting securing of the resource using the function modules on the basis of the amount of the resource measured in the resource measuring device and the upper limit value of the resource converted in the resource converter device.

6. The resource managing system according to claim 1, wherein the resource converting device performs the conversion on the basis of a resource conversion table for registering a conversion ratio determined on the basis of the amount of the resource used in a predetermined condition in the first executing environment and the amount of the resource used in the predetermined condition in the second executing environment.

7. The resource managing system according to claim 6, wherein the resource conversion table registers the conversion ratio every classification of the resource, and
the resource converting device acquires the corresponding conversion ratio from the resource conversion table in accordance with the classification of the resource used by the function module, and performs the conversion on the basis of the acquired conversion ratio.

8. The resource managing system according to claim 6, wherein the resource conversion table registers the conversion ratio every using mode of the resource, and
the resource converting device acquires the corresponding conversion ratio from the resource conversion table in accordance with the mode of the resource used by the function module, and performs the conversion on the basis of the acquired conversion ratio.

9. The resource managing system according to claim 6, wherein the conversion ratio is determined in the resource conversion table with respect to each of plural test modules on the basis of the amount of the resource used by this test module in the first executing environment and the second executing environment, and a maximum value among the conversion ratios determined with respect to the respective test modules is registered to the resource conversion table.

10. The resource managing system according to claim 6, wherein the conversion ratio is determined in the resource conversion table with respect to each of plural test modules on the basis of the amount of the resource used by this test module in the first executing environment and the second executing environment, and an average value of the conversion ratios determined with respect to the respective test modules is registered to the resource conversion table.

11. The resource managing system according to claim 1, wherein the resource limit notifying device displays a message showing that the amount of the resource used by the function module has reached an upper limit.

12. The resource managing system according to claim 1, wherein the resource limit notifying device generates log information showing that the amount of the resource used by the function module has reached an upper limit.

13. A resource managing program for managing a resource used by a function module, including:
a program for making a computer execute processings constructed by a resource measuring step for measuring the amount of the resource used by the function module in a first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

14. A resource managing program for managing a resource used by a first function module and plural second function modules requiring the first function module in its execution, including:
a program for making a computer execute processings constructed by a resource measuring step for measuring the amount of the resource used by the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

15. A resource managing program for managing a resource used by a first function module and plural second function modules requiring the first function module in its execution, including:
a program for making a computer execute processings constructed by a resource measuring step for measuring the amount of the resource used by the first function module in the execution of the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

16. A resource managing method for managing a resource used by a function module, including:
a resource measuring step for measuring the amount of the resource used by the function module in a first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

17. A resource managing method for managing a resource used by a first function module and plural second function modules requiring the first function module in its execution, including:
a resource measuring step for measuring the amount of the resource used by the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.

18. A resource managing method for managing a resource used by a first function module and plural second function modules requiring the first function module in its execution, including:
a resource measuring step for measuring the amount of the resource used by the first function module in the execution of the second function module in the first executing environment; a resource upper limit value acquiring step for acquiring an upper limit value of the resource in a second executing environment; a resource converting step for converting the upper limit value of the resource acquired in the resource upper limit value acquiring step into an upper limit value of the resource in the first executing environment; and a resource limit notifying step for performing notification relating to the limit of the resource on the basis of the amount of the resource measured in the resource measuring step and the upper limit value of the resource converted in the resource converting step.
